# EUROPÄISCHE PATENTSCHRIFT

(11) **EP 3 592 280 B1**
(45) Veröffentlichungstag und Bekanntmachung des Hinweises auf die Patenterteilung: **19.07.2023**
(21) Anmeldenummer: 18731362.2
(22) Anmeldetag: 28.05.2018
(51) Int. Cl.: A61C 5/64, A61C 5/66, B65D 81/32

(54) **ZWEI KOMPONENTEN MISCHKAPSEL, INSBESONDERE FÜR HOCHVISKOSE DENTALMATERIALIEN**
TWO-COMPONENT MIXING CAPSULE, PARTICULARLY FOR HIGHLY VISCOUS DENTAL MATERIALS
CAPSULE DE MÉLANGE DE DEUX COMPOSANTS, EN PARTICULIER POUR MATÉRIAUX DENTAIRES À VISCOSITÉ ÉLEVÉE

(30) Priorität: 30.05.2017 DE 102017111731
(43) Veröffentlichungstag der Anmeldung: 15.01.2020
(73) Patentinhaber: Kulzer GmbH, 63450 Hanau (DE)
(72) Erfinder: KEMENY, Andrea, 61381 Friedrichsdorf (DE); KONDZIELA, Mike, 35781 Weilburg (DE); SUFFEL, Ralf, 63762 Grossostheim (DE); UTTERODT, Andreas, 61267 Neu-Anspach (DE); ECK, Michael, 61389 Schmitten (DE); BALKENHOL, Markus, 63543 Neuberg (DE); KOCOGLU, Raif, 61200 Wölfersheim (DE)
(74) Vertreter: Bendele, Tanja
(86) Internationale Anmeldenummer: PCT/EP2018/063950
(87) Internationale Veröffentlichungsnummer: WO 2018/219874

(56) Entgegenhaltungen:
- EP-A1- 3 045 143
- WO-A1-93/11049
- WO-A1-2017/097868
- JP-A- S4 949 796
- US-A- 4 175 658
- US-B1- 6 375 460

## Beschreibung

Die Erfindung betrifft eine zwei Komponenten Mischkapsel zur Aufnahme und zum Mischen von zwei vorzugsweise pulverförmigen oder bevorzugt pastösen oder knetbaren, besonders bevorzugt dentalen Zusammensetzungen mit einem Kapselgehäuse, das an seinem vorderen Ende eine Ausbringtülle aufweist, wobei die Mischkapsel einen ersten Mischraum und einen zweiten Mischraum umfasst, wobei die beiden Mischräume zur Lagerung oder für den Transport voneinander getrennt werden können, indem der Mischraum durch ein drehbar gelagertes Drehelement dessen Drehachse (Y) in etwa senkrecht zur Längsachse (Z) der Mischkapsel, vorzugsweise des zweiten Mischraumes, angeordnet ist, in eine erste Stellung gedreht werden kann, in der der erste Mischraum vom zweiten Mischraum getrennt ist, vorzugsweise sind die Mittelachsen der Mischräume etwa 90° zueinander angeordnet. Durch Drehen des ersten Mischraumes in eine zweite Stellung, in der die Mittelachsen des ersten und zweiten Mischraumes im Wesentlichen koaxial angeordnet sind, bilden die beiden Mischräume einen gemeinsamen Mischraum, wobei durch Aufsetzen eines Auspresskolbens die Zusammensetzung nach dem Mischen ausgefördert werden kann.

Ebenfalls Gegenstand der Erfindung ist ein Verfahren sowie die Verwendung der erfindungsgemäßen Mischkapsel zum Mischen und Applizieren von zwei KomponentenZusammensetzungen, vorzugsweise von dentalen 2K-Zusammensetzungen.

Aus dem Stand der Technik ist eine Vielzahl an Mischkapseln im Dentalbereich bekannt, die zum Lagern und Mischen von zwei Komponentenzusammensetzungen geeignet sind. Kennzeichnend für Mischkapseln im Dentalbereich ist in der Regel ihre geringe Länge von etwa 32 mm, um ein Einsetzen der Mischkapsel in die Haltegabeln von bekannten Mischgeräten zu erlauben. Die Mischkapseln nach dem Stand der Technik weisen in der Regel zwei durch eine Folie mit einer Sollbruchstelle getrennte Kammern auf, die jeweils eine der beiden Bestandteile der zwei Komponentenzusammensetzung umfassen, wobei ein Kolben vor dem Mischen diese Folie durchstößt. Nach dem Mischen kann in die Mischkapsel ein Werkzeug eingesetzt werden, dass einen Austragskolben in der Mischkapsel verschiebt und so die gemischte Zusammensetzung aus der Mischkapsel ausfördern kann.

Nachteilig an den bekannten Mischkapseln ist, dass diese in der Regel dafür ausgelegt sind eine flüssige Monomerkomponente mit einer pulverförmigen Komponente zu vermischen. Aus dem Stand der Technik sind nahezu keine wirtschaftlich herstellbaren oder leicht zu bedienende Mischkapseln bekannt, die in der Lage sind auch zwei pastöse bis knetbare 2K-KomponentenZusammensetzungen miteinander zu mischen. Ferner müssen verschiedene Arretiermechanismen an den Kapseln im Stand der Technik vorgesehen werden, die ein unbeabsichtigtes Durchstoßen der Folie verhindern.

US 4,175,658 A offenbart eine einseitig zu öffnende Mischkapsel mit senkrecht auf der Mischkapselachse angeordnetem Verschluss und zwei innenliegenden Kammern. Die Kammern können durch Drehen eines Elementes um ein senkrecht zur Längsachse drehbares Element eine gemeinsame Kammer ausbilden. WO2017/097868 A1 ist Stand der Technik, welcher unter Artikel 54(3) EPÜ fällt, und offenbart eine zwei Komponenten-Mischkapsel mit einem oberen und unteren drehbaren Griffelement, wobei mindestens einem Griffelement ein erster Mischraum zugeordnet ist.

Aufgabe der Erfindung war es eine Mischkapsel zu entwickeln, die eine Lagerung und ein Mischen von pastösen bis knetbaren und optional mit pulverförmigen oder bevorzugt pastösen bis festen und zugleich thixotropen Mehrkomponentenzusammensetzungen erlaubt, wobei ggf. ebenso pastöse mit pulverförmigen Komponenten gemischt werden können. Ferner bestand die Aufgabe die Mischkapsel so zu dimensionieren, dass diese in gängige Mischapparate, wie sie in Zahnarztpraxen vorhanden sind, einsetzbar ist.

Gelöst wurden die Aufgaben mit einer Mischkapsel nach Anspruch 1 sowie einem Verfahren nach Anspruch 13 und der Verwendung nach Anspruch 16.

In der erfindungsgemäßen Mischkapsel können zwei dentale Zusammensetzungen gelagert und gemischt werden sowie die resultierende gemischte Zusammensetzung durch Verschieben des Verschlusskolbens vom hinteren Ende des Kapselgehäuses zum vorderen Ende des Kapselgehäuses appliziert werden. Gegenstand der Erfindung ist eine Mehr- oder ZweiKomponenten (2K) Mischkapsel zur Aufnahme, insbesondere Lagerung, und zum Mischen von mindestens zwei, insbesondere pastösen, knetbaren bis festen, vorzugsweise thixotropen und vorzugsweise dentalen Zusammensetzungen mit einem Kapselgehäuse, das an seinem vorderen Ende eine Ausbringöffnung aufweist, wie eine Ausbringöffnung direkt am Gehäuse oder insbesondere an einer integralen oder angesetzten Ausbringtülle, wobei die Mischkapsel ein im Kapselgehäuse drehbar gelagertes Drehelement und ein in dem Kapselgehäuse angeordneten Deckel ohne Griff(e) umfasst, wobei vorzugsweise die Drehachse (Y) des Drehelementes in etwa senkrecht zur Längsachse (Z) der Mischkapsel angeordnet ist, und wobei dem Drehelement ein drehbar gelagerter erster Mischraum zugeordnet ist und vorzugsweise im Kapselgehäuse ein zweiter Mischraum angeordnet ist und der Deckel ohne Griff(e) nicht drehbar mit dem Kapselgehäuse verbunden ist und, a) auf das Drehelement ein separates Griffelement aufsetzbar oder damit verrastbar ist, oder in das Drehelement in eine Öffnung ein separates Griffelement oder der Auspresskolben einsetzbar ist, und/oder b) das Drehelement mindestens eine Nut aufweist, und/oder c) das Drehelement mindestens einen integral mit dem Drehelement verbundenen Griff aufweist, und/oder d) das Drehelement mindestens eine Nut, eine mehreckige Öffnung, eine Öffnung mit ein- oder mehrzähliger Symmetrie zur Aufnahme eines mehreckigen Profils oder am seitlichen Umfang des Deckels mindestens einen Vorsprung oder mindestens einen im Deckel versenkbaren Vorsprung oder mindestens einen in das Drehelement einklappbaren Vorsprung oder mindestens einen in das Drehelement einklappbares Griffelement aufweist.

Der Deckel ist nicht drehbar angeordnet, vorzugsweise ist der Deckel gegenüber dem Drehelement angeordnet. Der Deckel ohne Griff(e) ist nicht drehbar mit dem Kapselgehäuse verbunden. Dem Drehelement ist vorzugsweise der drehbar gelagerte erste Mischraum zugeordnet, indem der Mischraum, der vorzugsweise als Rohrabschnitt oder einseitig geschlossene Hülse vorliegt, ein integrales Bauteil mit dem Drehelement bildet oder der separate Mischraum alternativ formschlüssig an dem Drehelement festgelegt wird. Erfindungsgemäß ist nur das Drehelement um die Drehachse, die in etwa senkrecht zur Längsachse der Mischkapsel angeordnet ist drehbar und der Deckel ist nicht drehbar. Der Mischraum liegt vorzugsweise als Rohrabschnitt oder einseitig geschlossene Hülse vor, und bildet ein integrales Bauteil mit dem Drehelement. Alternativ kann der erste Mischraum ein separates Bauteil sein, das formschlüssig an dem Drehelementfestlegbar ist. So kann der Mischraum bspw. mit dem Drehelement, insbesondere in einem Clip, verrastet werden.

Unter einen Drehelement wird vorzugsweise ein Flächenelement optional ein planares oder ein gewölbtes Flächenelement vorzugsweise mit Rastnocken zum beweglichen, drehbaren Eingreifen in die Öffnung des Kapselgehäuses oder in Aufnahmen am Deckel verstanden. An dem flächigen, vorzugsweise in etwa kreisförmigen Drehelement, ist der erste Mischraum angeordnet. In einer besonders bevorzugten Ausführungsform ist das Drehelement mit Rastnocken und erstem Mischraum ein integrales Bauteil. Der Deckel ohne Griff oder ohne Griffe weist vorzugsweise keine Vertiefungen und/oder Rippen auf. Das Drehelement kann auf der äußeren Oberfläche längliche Rippen oder mindestens einen profilierten Pfeil aufweisen, die die Greifbarkeit des Drehelementes bei gleichzeitiger Darstellung der Position aufzeigen.

Erfindungsgemäß ist es bevorzugt, wenn der zweite Mischraum im Bereich des vorderen Endes der Mischkapsel angeordnet ist, insbesondere zwischen der Ausbringtülle und dem ersten Mischraum. Des Weiteren ist am vorderen Ende in Richtung der Längsachse des Kapselgehäuses die Ausbringöffnung angeordnet und am hinteren Ende in Richtung der Längsachse ist der Verschlusskolben angeordnet. Der Verschlusskolben ist entlang der Längsachse in der Mischkapsel verschiebbar, wenn der erste und der zweite Mischraum den gemeinsamen Mischraum bilden.

Eine erfindungsgemäße Mischkapsel weist ein Kapselgehäuse auf, das eine Öffnung zur Aufnahme des Drehelementes im mittleren Bereich des Kapselgehäuses aufweist sowie eine zweite Öffnung zur Aufnahme des Deckels. Die zweite Öffnung zur Aufnahme des Deckels kann eine identische Größe zur Aufnahme des Drehelementes oder auch einen kleineren oder größeren Durchmesser aufweisen, sowie eine im hinteren Bereich gelegene Öffnung zur Aufnahme eines Verschlusskolbens als auch eine im vorderen Bereich des Kapselgehäuses gelegene Ausbringöffnung, wobei in der Öffnung zur Aufnahme des Drehelementes das Drehelement umfassend den ersten Mischraum angeordnet ist, insbesondere bildet das drehbar gelagerte Drehelement und der erste Mischraum, der vorzugsweise in Form eines Rohrabschnitts oder einer einseitig geschlossenen zylindrischen Hülse vorliegt, ein einteiliges Bauteil, insbesondere ein integrales Bauteil, erfindungsgemäß ist in der im hinteren Bereich gelegenen Öffnung der Verschlusskolben angeordnet. Vorzugsweise weist das Kapselgehäuse ansonsten eine durchgängig geschlossene, integrale Gehäusewand auf.

Nach einer bevorzugten Alternative ist das Drehelement auf der Oberseite des Kapselgehäuses angeordnet, oder das Drehelement ist auf einer der Seiten des Kapselgehäuses angeordnet, oder das Drehelement ist auf der Unterseite des Kapselgehäuses angeordnet. Die bevorzugte Anordnung des Drehelementes richtet sich nach der Geometrie des Mischgerätes oder der Geometrie des Austraggerätes. Als Unterseite gilt die Seite des Kapselgehäuses auf der die Ausbringöffnung angeordnet ist.

Ferner ist Gegenstand der Erfindung eine Mischkapsel mit einem Drehelement in oder auf das ein separates Griffelement, wie ein Knopf oder länglicher Formkörper, aufsetzbar oder in das ein separates Griffelement oder der Auspresskolben einsetzbar ist, insbesondere ist ein Griffelement in mindestens eine Öffnung im Drehelement einsetzbar. Die Öffnung kann eine ein- oder mehrzählige Symmetrie wie eine ein-, zwei-, drei- vier-, fünf-, sechs-, sieben- oder achtzählige Symmetrie aufweisen. Die Öffnung kann auch die Geometrie eines 3D-Logos aufweisen, wie beispielsweise eine Zahnform, in die ein Formkörper oder der Auspresskolben mit entsprechender Geometrie eingreifen kann. Das Griffelement soll vor und nach dem Mischen die Einstellung der ersten und zweiten Mischkammer zu einander erleichtern. Nach einer Alternative kann das Drehelement auch ein integrales Griffelement aufweisen, wie beispielsweise ein nach außen zulaufendes oder flächiges in etwa senkrecht abstehendes Flächenelement. Nach einer weiteren Alternative kann das Drehelement mindesten eine Nut aufweisen. In die Nut kann vorzugsweise ein Hilfsmittel, wie ein länglicher Pin oder ein längliches zur Nut passendes Profil, zur Verbesserung des Drehmomentes eingesetzt werden. Sowohl die Nut als auch das Hilfsmittel können übliche Profilierungen aufweisen. Das Griffelement kann nahezu senkrecht scheibenförmig oder als Stift auf dem Drehelement angeordnet sein, oder mindestens zwei gewölbte Vertiefungen zur Aufnahme zweier Finger aufweisen.

Nach einer Alternative weist das Drehelement eine mehreckige Öffnung oder eine Öffnung mit einer ein- bis mehrzähligen Drehachse, insbesondere eine Innen-Mehrkantöffnung, auf, in die der Auspresskolben mit seinem vorderen Bereich, der ein entsprechendes mehreckiges Profil oder ein Profil mit einer ein- bis mehrzähligen Drehachse aufweist, einsetzbar ist. Vorzugsweise ist der Auspresskolben im vorderen Bereich mit einem Außen-Mehrkant-Profil, welches zur mehreckigen Öffnung passt ausgebildet. Bevorzugte Profile sind Innensechskant und Außen-Sechskant Profil. Generell sind auch andere Profile wie sternförmige, zahnförmige oder blumenförmige Profile denkbar.

Entsprechend einer weiteren Alternative kann das Drehelement am äußeren seitlichen Umfang mindestens einen Vorsprung oder einen im Deckel versenkbaren Vorsprung aufweisen. Daher kann das Drehelement in der Draufsicht wie ein abstrahiertes Zahnrad aussehen.

Als unterschiedliche Ausführungsvarianten der Kombination Kapselgehäuse und Deckel sind die folgenden bevorzugt: a) der Deckel ohne Griff(e) ist mit dem Kapselgehäuse verklebt, und/oder b) der Deckel ohne Griff(e) ist nicht drehbar mit dem Kapselgehäuse verrastet.

In bevorzugten Ausführungsformen kann der Deckel wie folgt ausgestaltet sein: a) der Deckel ohne Griff(e) weist die gleiche äußere Oberflächenkontur wie das Kapselgehäuse auf, und/oder b) der Deckel ohne Griff(e) weist eine gewölbte, strukturierte und/oder planare äußere Oberfläche auf, und/oder c) der Deckel ohne Griff(e) weist eine Vertiefung in Form einer 3D-Wiedergabe eines Markenbestandteils oder einer Marke auf, und/oder d) der Deckel ohne Griff(e) weist mindestens eine Nut, vorzugsweise eine ein- mit mehreckige Nut, wie eine rechteckige Nut, eine mehreckige Öffnung, eine Öffnung mit ein- oder mehrzähliger Symmetrie auf, insbesondere eine Innen-Mehrkantöffnung, zur Aufnahme eines mehreckigen Profil, insbesondere eines Außen-Mehrkantprofils, oder weist am seitlichen Umfang des Deckels mindestens einen Vorsprung oder mindestens einen im Deckel versenkbaren Vorsprung auf oder mindestens einen in das Drehelement einklappbaren Vorsprung oder mindestens einen in das Drehelement einklappbares Griffelement aufweist.

Die beiden pastösen, knetbaren bis festen, vorzugsweise thixotropen und vorzugsweise dentalen Zusammensetzungen, wie Zusammensetzung A und Zusammensetzung B, liegen vorzugsweise jeweils getrennt im ersten und zweiten Mischraum als eine einzige pastöse bis knetbare Zusammensetzung vor, insbesondere vorzugsweise als einstückige Zusammensetzung. Alternativ kann die Zusammensetzung in Form mehrerer Komponenten vorliegen, insbesondere weist eine Komponente mindestens 1,5 mm in einer Dimension auf. Die Zusammensetzung liegt vorzugsweise nicht pulverförmig vor.

An dem Drehelement kann eine wandartige Erhöhung oder andersartig geformte Erhöhung als zusätzlicher Griff für ein leichteres Drehen ausgebildet sein. Die erfindungsgemäße Mischkapsel mit Kapselgehäuse und ohne Führungsadapter und ohne Auspresskolben weist vorzugsweise eine Länge von kleiner gleich 10 cm, bevorzugt kleiner gleich 8 cm, besonders bevorzugt eine Länge von kleiner gleich 5 cm oder kleiner gleich 3,5 cm auf. Der gesamte Mischraum der Mischkapsel weist vorzugsweise eine Länge von 2,0 bis 4,0 cm, insbesondere von 2,5 bis 3,0 cm bei einem Durchmesser von 0,5 bis 2,0 cm auf, insbesondere von 0,8 bis 1,2 cm. Das Volumen des gesamten Mischraumes beträgt etwa von 20 bis 200 mm³, insbesondere von 50 mm³ bis 135 mm³. Die erfindungsgemäße Mischkapsel ist derart ausgebildet, dass sie in gängigen PLT Austragsgeräten bzw. PLT Applikatoren eingesetzt werden kann.

Der drehbar gelagerte Mischraum kann innerhalb eines Rohrabschnittes oder in einem einseitig geschlossenen Rohrabschnitt als einseitig geschlossene Hülse angeordnet sein. Vorzugsweise ist der erste Mischraum in einem Rohrabschnitt angeordnet, der integral mit dem drehbar gelagerten Drehelement verbunden ist. Der erste oder der zweite Mischraum sind als Teile des herstellbaren gesamten Mischraumes zu verstehen und können den gesamten Mischraum bilden, in dem vorzugsweise die Mischung erfolgt.

Nach einer Ausführungsform kann das drehbar in dem Kapselgehäuse gelagerte oder drehbar angeordnete Drehelement mit dem Deckel verbunden sein, vorzugweise lösbar verbunden. Die Verbindung des Drehelementes mit dem Deckel kann bspw. mittels Rastnocken am Deckel erfolgen. Bevorzugt kann das Drehelement mit dem Kapselgehäuse bspw. mittels Rastnocken am Kapselgehäuse verbunden sein. Der Deckel kann mittels Ultraschall verschweißt, verklebt, und/oder mit dem Kapselgehäuse verrastet oder aneinander gesteckt sein. Alternativ ist das Drehelement mit dem Kapselgehäuse drehbar verbunden. Als ein drehbares Drehelement oder drehbarer Mischraum, Rohrabschnitt oder Hülse wird erfindungsgemäß verstanden, dass die vorgenannten Komponenten um eine Drehachse, die sich in etwa senkrecht zur Längsachse des Kapselgehäuses bzw. senkrecht zur Längsachse des zweiten Mischraumes befindet um mindestens 30° vorzugsweise mindestens um 90° drehbar sind, vorzugsweise sind die Komponenten um 360° drehbar. Wenn die Komponenten um 360° drehbar sind kann es bevorzugt sein auf dem Drehelement Markierungen, die die Stellung der ersten Mischkammer anzeigen anzubringen, insbesondere in Relation zur zweiten Mischkammer. Vorzugsweise weist das Drehelement und/oder die Mischkammer Rastnocken auf, damit der Anwender spürt, wenn er die exakte koaxiale Stellung der Mischkammer eingestellt hat.

Ferner ist es bevorzugt, wenn an dem im Kapselgehäuse drehbar gelagerten Drehelement der erste Mischraum angeordnet ist, insbesondere bildet das drehbargelagerte Drehelement und der erste Mischraum ein einteiliges Bauteil, insbesondere ein integrales Bauteil. Der Mischraum kann vorzugsweise in Form eines Rohrabschnitts oder in einer Alternative als einseitig geschlossener Rohrabschnitt bspw. als einseitig geschlossene zylindrische Hülse vorliegen, wobei diese vorzugweise mit dem Drehelement als ein integrales Bauteil vorliegt. Der Rohrabschnitt kann zylindrisch, kreisförmig, als auch polygonal, wie sechseckig ausgebildet sein.

Bevorzugt weisen der Rohrabschnitt oder die einseitig geschlossene zylindrische Hülse an ihren offenen Enden an je zwei sich gegenüberliegenden Enden der Mantelflächen zumindest bereichsweise eine gewölbte Kontur auf, insbesondere weisen die Enden der Mantelflächen eine Kontur auf, die drehbar und dicht an einer zylindrische oder nicht zylindrischen aber kreisförmigen Mantelinnenflächen des Kapselgehäuses anliegen. Dabei ist es bevorzugt, wenn zwei sich gegenüberliegenden Enden der Mantelflächen eine Kontur eines Kreisabschnitts aufweisen. Optional weisen die offenen Enden eine umlaufende wellenförmige Kontur auf, insbesondere sind der Rohrabschnitt oder die einseitig geschlossene zylindrische Hülse in einem kreisförmigen mittleren Bereich des Kapselgehäuses mit den offenen Enden drehbar und dicht an der Gehäuseinnenwand anbringbar.

Nach zwei alternativen bevorzugten Ausführungsformen weist die Mischkapsel einen mit dem drehbar gelagerten Drehelement verbundenen Rohrabschnitt auf oder eine einseitig geschlossene zylindrische Hülse auf, die den ersten Mischraum bilden, wobei sich entweder a) im vorderen Bereich im Kapselgehäuse der zweite Mischraum befindet oder b) im hinteren Bereich im Kapselgehäuse der zweite Mischraum befindet. Dabei ist es bevorzugt, wenn der Rohrabschnitt oder die Hülse ein integrales Bauteil mit dem Drehelement bilden. Alternativ kann der als separates Bauteil vorliegende Mischraum formschlüssig mit den Drehelementen festgelegt werden.

Die erfindungsgemäße Mischkapsel kann in verschiedene Stellungen zum Lagern, Mischen oder Applizieren überführt werden. So kann die erfindungsgemäße Mischkapsel mit dem drehbargelagerten Drehelement verbunden mit dem Rohrabschnitt, insbesondere bilden das Griffelement und der Rohrabschnitt eine integrale Einheit, den ersten Mischraum bilden und im vorderen Bereich im Kapselgehäuse ist der zweite Mischraum angeordnet,
wobei sich die Mischkapsel a) in einer ersten Stellung bspw. zur Lagerung oder für den Transport befindet, wenn sich die Längsachse (Z1) des Rohrabschnitts vorzugsweise in etwa 90° verdreht zur Längsachse (Z) des Kapselgehäuses befindet, so dass der erste Mischraum, insbesondere umfassend eine Zusammensetzung B, und der zweite Mischraum, insbesondere umfassend eine Zusammensetzung A, voneinander getrennt sind, oder wobei sich die Mischkapsel b) in einer zweiten Stellung bspw. "Mischstellung Mischung" befindet, wenn sich die Längsachse (Z1) des Rohrabschnitts vorzugsweise im Wesentlichen koaxial zur Längsachse (Z) des Kapselgehäuses oder des zweiten Mischraumes befindet, so dass der erste Mischraum und der zweite Mischraum einen gemeinsamen Mischraum bilden, insbesondere umfassend die Zusammensetzungen A und B, alternativ befindet sich die Mischkapsel in der zweiten Stellung, wenn der Rohrabschnitt oder die einseitig geschlossene Hülse umfassend den ersten Mischraum so gedreht sind, dass der erste und der zweite Mischraum einen gemeinsamen Mischraum bilden, oder, wobei sich die Mischkapsel in b) der zweiten Stellung ebenfalls in einer Ausbringstellung c) befindet, wenn der Führungsadapter mit beweglichem Auspresskolben am hinteren Ende des Kapselgehäuses angeordnet ist, wobei der bewegliche Auspresskolben den Verschlusskolben durch den ersten Mischraum und den zweiten Mischraum in Richtung auf das vordere Ende des Kapselgehäuses oder in Richtung auf den hinteren Bereich in der Ausbringtülle verschieben kann. Mit dem Auspresskolben kann der Verschlusskolben vorzugsweise im Kapselgehäuse in Richtung auf die Ausbringöffnung geschoben werden, so dass die gemischte Zusammensetzungen C durch den Verschlusskolben in Richtung auf die Ausbringöffnung geschoben wird und aus der Ausbringöffnung herausgedrückt werden kann.

Als getrennt gelten die Mischräume, wenn diese räumlich voneinander getrennt sind und die Zusammensetzungen A und B nicht miteinander wechselwirken können.

Bevorzugt weist das Drehelement mindestens ein Arretiermittel, wie eine Rastnocke, auf und optional weist das Kapselgehäuse der Mischkapsel mindestens ein Arretiermittel auf, wie eine Vertiefung, die vorzugsweise als Positiv und Negativ in der zweiten Stellung der Mischkapsel ineinandergreifen, in der aus dem ersten Mischraum und dem zweiten Mischraum ein gemeinsamer Mischraum gebildet wird. Somit wird die Position, in der der erste Mischraum und der zweite Mischraum einen gemeinsamen Mischraum bilden, durch die Arretiermittel fixiert. Die Arretiermittel können beispielsweise mindestens eine Rastnocke und eine entsprechende Vertiefung sein, die ineinandergreifen. Gleichfalls können die mindestens eine Rastnocke an der Mischkapsel oder die mindestens eine Vertiefung an dem Drehelement ausgebildet sein. Die Arretiermittel, wie Rastnocke(n), und die zum Einrasten der Rastnocken entsprechende Vertiefung(en), vorzugsweise mindestens zwei im etwa 90° Winkel zueinander angeordnete Vertiefungen, erlauben die Einstellung einer Transport- oder Lagerposition des ersten Mischraumes etwa senkrecht zur Längsachse der Mischkapsel, die der ersten Stellung entspricht, und eine Misch- und/oder Austragsposition, in der die Längsachse des ersten Mischraums koaxial zur Längsachse der Mischkapsel arretiert ist, die der zweiten Stellung entspricht.

An die erfindungsgemäße Mischkapsel ist vorzugsweise an ihrem hinteren Ende des Gehäuses ein Führungsadapter anbringbar, in dem ein beweglicher Auspresskolben angeordnet ist. Der im Führungsadapter bewegliche, vorzugsweise arretierte Auspresskolben, kann im Führungsadapter bewegt werden, indem eine gewisse Kraft aufgebracht wird, so dass sich die Arretierung löst. Die Arretierung kann aus mindestens einer Erhöhung auf dem äußeren Umfang des Auspresskolbens bestehen, die innen am Führungsadapter anliegt, insbesondere formschlüssig oder kraftschlüssig anliegt.

Der Führungsadapter mit beweglichem Auspresskolben kann vorzugsweise mittels eines Bajonett-Verschlusses, einer Schraub- oder Clipverbindung oder anderen dem Fachmann bekannten Maßnahmen am hinteren Ende des Kapselgehäuses festgelegt werden. Dabei kann es bevorzugt sein, dass vor dem Festlegen des Führungsadapters der Auspresskolben in die Vertiefung des Verschlusskolbens eingesetzt und der Verschlusskolben entlang der ersten Mischkammer in das Kapselgehäuse hineingeschoben werden kann, um anschließend den Führungsadapter an dem hinteren Ende des Kapselgehäuses festzulegen. Erfindungsgemäß wird durch das Aufstecken des Führungsadapters mit Auspresskolben der Verschlusskolben in das Kapselgehäuse in Richtung auf die Ausbringöffnung verschoben. In dieser Position kann die Mischkapsel in übliche Applikatoren für PLT (Compulen) eingesetzt werden. Durch das Verschieben des Verschlusskolbens beim Aufstecken des Führungsadapters konnte der Hub in der Mischkapsel unter Beachtung des maximalen Hubs von üblichen Applikatoren vergrößert werden. Der Verschlusskolben ist erfindungsgemäß in einer Öffnung am hinteren Ende des Kapselgehäuses angeordnet.

Ebenfalls Gegenstand der Erfindung ist eine Mischkapsel mit Kapselgehäuse, wobei in dem Kapselgehäuse an dessen hinteren Ende ein Verschlusskolben angeordnet ist, der insbesondere die Mischkapsel an ihrem hinteren Ende verschließt, vorzugsweise luftdicht und/oder feuchtigkeitsdicht verschließt. Dabei ist der Verschlusskolben entlang der Längsachse (Z) der Mischkapsel durch den ersten Mischraum oder den hohlen Rohrabschnitt und einen zweiten Mischraum hindurchführbar , vorzugsweise durch den gemeinsamen Mischraum, wenn der erste Mischraum oder der Rohrabschnitt im Wesentlichen koaxial zur Längsachse (Z) der Mischkapsel ausgerichteten sind, wobei vorzugsweise der erste und der zweite Mischraum einen gemeinsamen Mischraum bilden. Der Verschlusskolben ist innen im hinteren Ende des Gehäuses angeordnet. Der Verschlusskolben ist entlang der Längsachse der Mischkapsel verschiebbar angeordnet und verschließt die Mischkapsel an ihrem hinteren Ende, vorzugsweise luftdicht und/oder feuchtigkeitsdicht.

Der zweite Mischraum wird vorzugsweise durch einen Bereich im vorderen mittleren Bereich des Kapselgehäuses gebildet. Alternativ kann der zweite Mischraum auch im hinteren Bereich des Kapselgehäuses angeordnet sein. Der erste Mischraum befindet sich im drehbar gelagerten Rohrabschnitt oder in der drehbar gelagerten einseitig geschlossenen Hülse mit einem Boden, wobei der Boden der einseitig geschlossenen Hülse mittels des Verschlusskolbens von der Hülse lösbar ist, um den Verschlusskolben durch die Hülse hindurchschieben zu können. Sofern sich der erste Mischraum in einem drehbar gelagerten Rohrabschnitt befindet, insbesondere einem hohlen Rohrabschnitt, kann der Verschlusskolben in der zweiten Stellung durch den Rohrabschnitt und optional den zweiten Mischraum geschoben werden, wenn die Achse des ersten Mischraumes, insbesondere des hohlen Rohrabschnitts, koaxial zur Längsachse der Mischkapsel ausgerichtet ist.

Gleichfalls Gegenstand der Erfindung ist eine Mischkapsel in der der bewegliche Verschlusskolben in einer Alternative in seinem Durchmesser reduzierbar ist, insbesondere ist der Durchmesser (D1) des Verschlusskolbens im Wesentlichen auf den Durchmesser (D2) reduzierbar. Dazu trägt der Verschlusskolben vorzugsweise an seinem äußeren Umfang Lamellen. In einer weiteren Alternative kann der Verschlusskolben einen festen Durchmesser aufweisen. Der erfindungsgemäße Verschlusskolben weist vorzugsweise an seiner dem Mischraum abgewandten Seite eine Vertiefung auf, in die der vordere Bereich des Auspresskolbens einsteckbar ist. Ferner weist der Verschlusskolben an seinem äußeren Umfang mindestens eine, vorzugsweise radial abstehende Lamelle auf. Nach bevorzugten Alternativen weist der Verschlusskolben zwei bis eine Vielzahl an Lamellen am äußeren Umfang auf. Die Lamellen können vorzugsweise aus einem elastischen Material, bspw. TPE (Thermoplastischem Elastomer) oder aufgrund ihrer Geometrie elastisch ausgebildet sein. Die Lamellen bilden vorzugsweise ein integrales Bauteil mit dem Verschlusskolben. Ferner können die Lamellen an einer Seite am äußeren Umfang oder an beiden Seiten mit einer Phase ausgebildet sein. Die Lamellen können aus dem gleichen Material wie der Verschlusskolben oder auch aus einem Silicon oder einem anderen geeigneten Material hergestellt sein.

An der dem Mischraum zugewandten Seite weist der Verschlusskolben vorzugsweise zumindest teilweise eine definierte Oberflächenrauheit auf. Bevorzugt weist die dem Mischraum zugewandte Seite eine Fläche einer definierten Größe, vorzugsweise eine kreisförmige Fläche mit Oberflächenrauheit, auf. Die Oberflächenrauheit kann mittels Erodieren, abtragenden Verfahren, wie Sandstrahlen, Ätzen oder auch aufbauenden Verfahren etc. hergestellt werden. Die Oberflächenrauheit liegt vorzugsweise bei einer Rauheit (mitten Rauheit) Ra von 3,5 µm (Mikrometer) bis 30 µm, vorzugsweise von 6 µm bis 24 µm, bevorzugt von 8 µm bis 20 µm, besonders bevorzugt von 10 µm bis 20 µm, alternativ um 10 µm mit +/- 2,5 µm. Alternativ kann die Rauheit der Erodierstruktur nach VDI 12 3400 die Kennung 30, 33, 36, 39 oder 42 aufweisen. Gleichfalls kann das Kapselgehäuse oder der Rohrabschnitt soweit erforderlich zumindest teilweise bis vollständig mit einer definierten Oberflächenrauheit versehen sein.

Ferner weist die Mischkapsel an ihrem Gehäuse a) die Ausbringöffnung auf. Die Ausbringöffnung ist vorzugsweise in einer Ausbringtülle als integraler Bestandteil des Kapselgehäuses ausgebildet. Alternativ kann eine Ausbringöffnung b) in einer an das Kapselgehäuse festlegbaren Ausbringtülle angeordnet sein. Die Ausbringtülle ist vorzugsweise in sich gebogen und weist eine Form wie bekannte Mischkapseln bzw. Carpulen auf, so weist sie bspw. eine Form auf, die ein Austragen des Dentalmaterials in eine Zahnkavität erlaubt.

Nach einer weiteren Alternative ist es bevorzugt, wenn in der Ausbringtülle innen im vorderen oder hinteren Bereich vor dem Auslass mindestens ein Widerstandsmittel angeformt ist, vorzugsweise ist das Widerstandsmittel so ausgebildet, dass es eine Veränderung der Viskosität der auszutragenden Zusammensetzung und/oder ein zusätzliches Vermischen der auszutragenden Zusammensetzung bewirken kann. In bevorzugten Ausführungsformen ist das Widerstandsmittel eine nicht über den gesamten Durchmesser reichende Wand oder mindestens eine Nase.

Das Material aus dem die Einzelteile der Mischkapsel, wie das Kapselgehäuse, die Ausbringtülle, das Drehelement oder die Griffelemente, der Rohrabschnitt, die Hülse, der Verschlusskolben, der Führungsadapter, der Auspresskolben und/oder das Widerstandsmittel bestehen umfasst vorzugsweise einen tribologisch modifizierten Kunststoff, wie PBT-POM, Polybutylenterephthalat (PBT), Polyoxymethylen (POM), PC (Polycarbonat), sowie Kunststoffe umfassend organische und/oder anorganische Füllstoffe, wie bspw. die folgenden Additive, wie Silikonöl, Grafit (GR), Fluorkohlenstoff (TF), Kohlenstofffasern (CF), MoS₂ (MO), Polyolefinwaxen oder andere Festschmierstoffe. Ebenfalls geeignete Materialien zur Herstellung der vorgenannten Kapselbestandteile können ausgewählt sein aus einem polymeren Material, gefülltem polymeren Material, einem faserverstärktem Polymer, Hybridmaterial, wobei das polymere Material ausgewählt sein kann aus Polycarbonat, Polyamid, Fluorpolymeren, Polysulfid enthaltenden Polymeren, Polysulfon enthaltenden Polymeren, Polyaryletherketonen, Polyimiden, PAEK (Polyaryletherketonen), PEEK (Polyetheretherketonen), PEK (Polyetherketonen), PEKK (Polyetherketonketonen), PEEEK (Polyetheretheretherketonen), PEEKK (Polyetheretherketonketonen), PEKEKK (Polyetherketonetherketonketonen), PES (Polyethersulfonen), PPSU (Polyphenylensulfonen), Polyarylsulfonen, PSU (Polysulfonen), PPS (Polyphenylensulfid), PFA (Perfluoralkoxy-Polymeren), PFE (Polyfluorenylenethynylen-Polymeren), PVDF (Polyvinylidenfluorid), PTFE (Polytetrafluoroethylen), PAI (Polyamidimiden), PI (Polyimiden), PEI (Polyetherimiden), PBI (Polybenzimidazolen). Der Auspresskolben ist vorzugsweise aus Polycarbonat gefertigt. Der Verschlusskolben kann vorzugsweise aus einem TPE (Thermoplastischen Elastomer) mit einer Härte von 60 - 100 Shore A, vorzugsweise 70 -90 Shore A gefertigt sein. Ein bevorzugtes TPE kann umfassen TPE-S, wie SEBS, Styrol-Ethenbuten-Styrol-Blockcopolymer.

Nach einer weiteren Ausführungsform ist Gegenstand der Erfindung ein Verfahren zum Mischen von mindestens zwei Zusammensetzungen A und B zu einer Zusammensetzung C in der erfindungsgemäßen Mischkapsel, insbesondere von pastösen, knetbaren bis festen, vorzugsweise thixotropen Zusammensetzungen, besonders bevorzugt von dentalen Zusammensetzungen, umfassend die Schritte
(i) Überführen der Mischkapsel aus einer a) ersten Stellung in eine b) zweite Stellung indem durch Drehen des Drehelementes um seine Drehachse (Y) mit dem Rohrabschnitt in dem sich der erste Mischraum und die Zusammensetzung B befindet, der Rohrabschnitt, insbesondere aus einer nicht koaxialen Stellung seiner Längsachse zur Längsachse der Kapsel, vorzugsweise einer etwa senkrecht zur Längsachse angeordneten Stellung, in Richtung auf die Längsachse (Z) des Kapselgehäuses, insbesondere im Wesentlichen koaxial zur Längsachse (Z) des Kapselgehäuses gedreht wird, so dass der erste Mischraum umfassend die Zusammensetzung B und der zweite Mischraum im Kapselgehäuse umfassend die Zusammensetzung A einen gemeinsamen Mischraum bilden,
(ii) Mischen der Zusammensetzungen A und B miteinander, wobei sich insbesondere die Mischkapsel in der zweiten Stellung b) befindet, und
(iii) Erhalten der Zusammensetzung C.

Das (iv) Ausbringen der Zusammensetzung C aus der Mischkapsel erfolgt vorzugsweise mit den Schritten (iv.1) Festlegen des Führungsadapters mit beweglichem Auspresskolben am hinteren Ende des Kapselgehäuses, und optional (iv.2) Einschieben des Auspresskolbens zusammen mit dem Verschlusskolben in das Kapselgehäuse der Mischkapsel, vorzugsweise bis der Verschlusskolben gegen die vordere innere Wand des Kapselgehäuses gedrückt wird, so dass der Verschlusskolben vom Auspresskolben durch den gemeinsamen Mischraum geschoben wird.

In dem erfindungsgemäßen Verfahren befindet sich vorzugsweise die Mischkapsel a) in einer ersten Stellung, wenn sich die Längsachse (Z1) des Rohrabschnitts vorzugsweise in etwa mindestens 30°, vorzugsweise um etwa 90° verdreht zur Längsachse (Z) des Kapselgehäuses befindet, so dass der erste Mischraum, insbesondere umfassend die Zusammensetzung B, und der zweite Mischraum, insbesondere umfassend die Zusammensetzung A, voneinander getrennt sind, oder wobei sich die Mischkapsel
b) in einer zweiten Stellung, bspw. einer Mischstellung befindet, wenn sich die Längsachse des Rohrabschnitts, vorzugsweise im Wesentlichen koaxial zur Längsachse des Kapselgehäuses befindet, so dass der erste Mischraum und der zweite Mischraum einen gemeinsamen Mischraum bilden, insbesondere umfassend die Zusammensetzungen A und B, oder, wobei sich die Mischkapsel in Stellung b) auch in einer Ausbringstellung c) befindet, wenn der Führungsadapter mit beweglichem Auspresskolben am hinteren Ende des Kapselgehäuses angeordnet ist, wobei der bewegliche Auspresskolben den Verschlusskolben durch den gemeinsamen Mischraum in Richtung auf den Auslass oder die Ausbringöffnung verschieben kann oder der Verschlusskolben gegen die vordere innere Wand des Kapselgehäuses verschoben werden kann. Dabei wird durch den Verschlusskolben vorzugsweise die Zusammensetzung C in Richtung auf die Ausbringöffnung geschoben und kann durch die Ausbringöffnung appliziert werden.

Beim Mischen wird die Mischkapsel zumindest entlang eines Teils der Längsachse der Mischkapsel bzw. des Kapselgehäuses oszillierend bewegt. Bevorzugt wird die Mischkapsel mit einem Teil ihrer Längsachse entlang einer Kreisbahn mit einem Radius oszillierend bewegt.

Zum Mischen der Zusammensetzungen A und B ist der Führungsadapter mit beweglichem Auspresskolben vorzugsweise noch nicht am hinteren Ende des Kapselgehäuses festgelegt.

In einer Alternative ist der Rohrabschnitt als eine einseitig geschlossene Hülse mit Boden ausgebildet in dem sich der erste Mischraum und die Zusammensetzung B befindet, wobei der Boden der Hülse nach dem Mischen vom Verschlusskolben in die Hülse verschoben werden kann, insbesondere kann der Boden bis in das vordere Ende des Kapselgehäuses geschoben werden. Der Boden der Hülse kann folienartig ausgebildet sein und kann Sollbruchstellen aufweisen. Nach einer bevorzugten Ausführungsform wird der erste Mischraum von einem beidseitig offenen Rohrabschnitt gebildet.

Gleichfalls Gegenstand der Erfindung ist die Verwendung einer Mischkapsel in der eine erste Mischkammer durch Drehen um ihre Drehachse (Y), wobei die Drehachse (Y) in etwa senkrecht zur Längsmittelachse (Z) des Kapselgehäuses der Mischkapsel angeordnet ist, in eine erste Stellung zur Lagerung von vorzugsweise mindestens zwei Zusammensetzungen und in eine zweite Stellung zum Mischen der Zusammensetzungen und Applizieren der gemischten Zusammensetzung drehbar ist, wobei in der zweiten Stellung die erste Mischkammer mit einer zweiten Mischkammer, die im vorderen oder hinteren Bereich des Kapselgehäuses angeordnet sein kann, eine gemeinsame Mischkammer bilden. Dabei wird die erste Mischkammer vorzugsweise durch Drehen ihrer Längsachse (Z1) um ihre Drehachse (Y) geschwenkt. Dabei ist im Kapselgehäuse am hinteren Ende ein Verschlusskolben angeordnet, wobei insbesondere der Verschlusskolben entlang der Längsachse (Z) der Mischkapsel durch den ersten Mischraum und/oder den hohlen Rohrabschnitt und einen zweiten Mischraum hindurchführbar ist, wenn der Mischraum oder der Rohrabschnitt koaxial zur Längsachse (Z) der Mischkapsel ausgerichtet sind, zum Applizieren aus der gemeinsamen Mischkammer. Esist vorteilhaft, wenn der Mischraum oder das Drehelement oder die Kapsel jeweils in der Position 0°, 90°, 180° und/oder 270° durch einen Anschlag positioniert wird. Bevorzugt wird das Mischelement in den Positionen Lagerung (erste Stellung), zweite Stellung (Mischen) und in der Ausbringstellung durch ein Arretiermittel, wie einen Anschlag oder Verrastung in der Position fixiert.

Ferner ist Gegenstand der Erfindung die Verwendung der Mischkapsel zum Lagern, Mischen und Applizieren (Ausbringen) von pastösen bis knetbaren oder festen dentalen zwei Komponenten Zusammensetzungen. Die mischbaren Zusammensetzungen sind vorzugsweise thixotrope dentale Zusammensetzungen.

Die in den nachfolgenden Figuren dargestellten Ausführungsformen stellen beispielhafte erfindungsgemäße Gegenstände dar, ohne die Erfindung auf diese Gegenstände zu beschränken.

Die Figuren stellen dar:
**Figur 1****:** Erfindungsgemäße Mischkapsel 1 (leer) mit Führungsadapter 7 in Schnittdarstellung und nach vorne geschobenen Verschlusskolben **6.**
**Figur 2a** und **2b****:** Wie Figur 1, wobei Figur 2a eine Schnittdarstellung und Fig. 2b eine Draufsicht ist.
**Figuren 3a**, **3a*** und **3a****: Mischkapsel **1** in Schnittdarstellung in erster Stellung (Lagerposition) mit Zusammensetzungen **A** und **B** - mit Führungsadapter **7** und Auspresskolben **8,** der nicht festgelegt ist.
**Figuren 4a****,** **4b** und **4c****:** Schnittdarstellung der Mischkapsel **1** in zweiter Stellung mit koaxialer Ausrichtung des ersten und zweiten Mischraumes **5a** und **5b.**
**Figuren 5a****,** **5b** und **5c****:** Mischkapsel **1** mit gemischter Zusammensetzung **C** bereit zur Applikation mit aufgesetztem Führungsadapter **7** und Auspresskolben **8.**
**Figuren 5d** und **5e****:** Mischkapsel in einer Stellung, in der die Applikation der Zusammensetzung C bereits erfolgt ist mit ganz nach vorne geschobenem Verschlusskolben und Auspresskolben.
**Figuren 6a, 6b, 6c****:** Drehelement mit Rohrabschnitt
**Figuren 7a, 7b, 7c** und **7d****:** Verschlusskolben **6**
**Figuren 8a, 8b****:** Auspresskolben **8**
**Figur 9****:** Führungsadapter **7** mit Bajonett-Verschluss
**Figuren 10a** und **10b****:** Ausbringtülle innen mit Widerstandsmitteln **9.**
**Figuren 11a, 11b, 11c, 11d****,** **11e, 11f** und **11g****:** Unterschiedliche Drehelemente **4.2,** an die verschiedene Griffelemente 13 anbringbar oder angeformt sind.

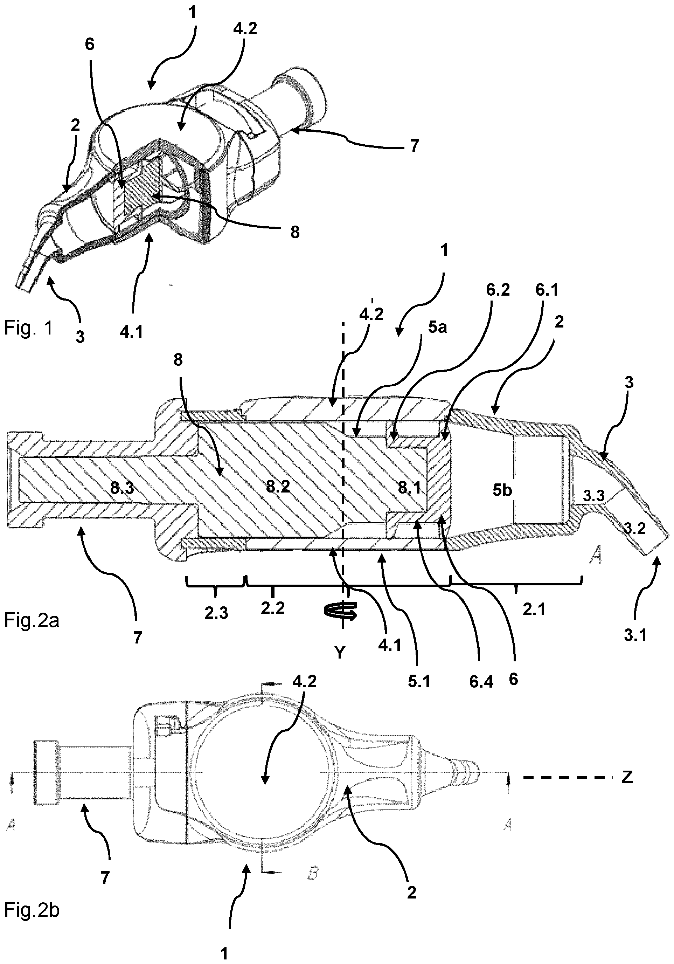

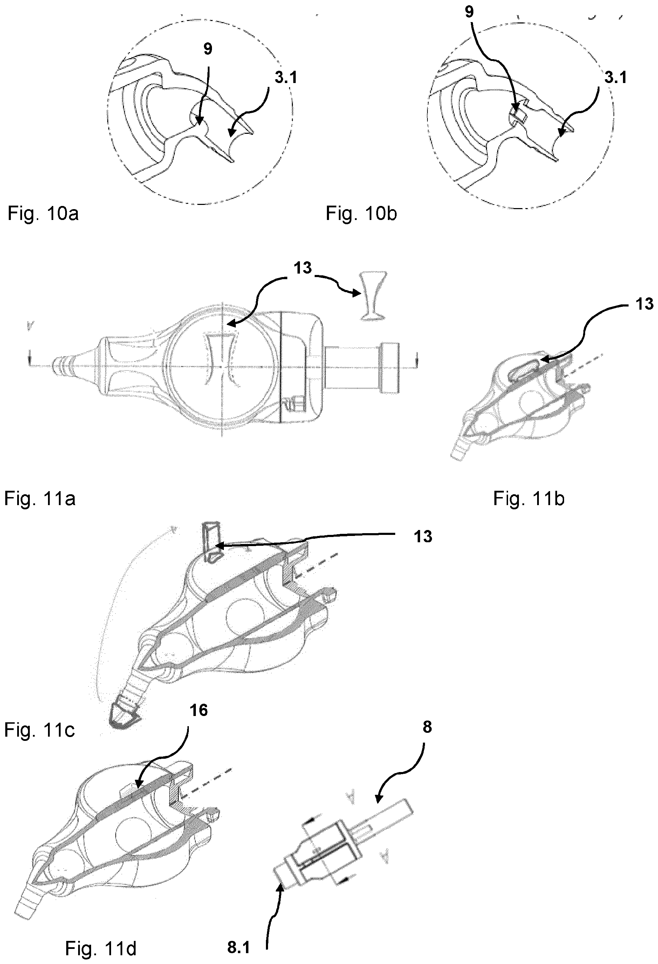

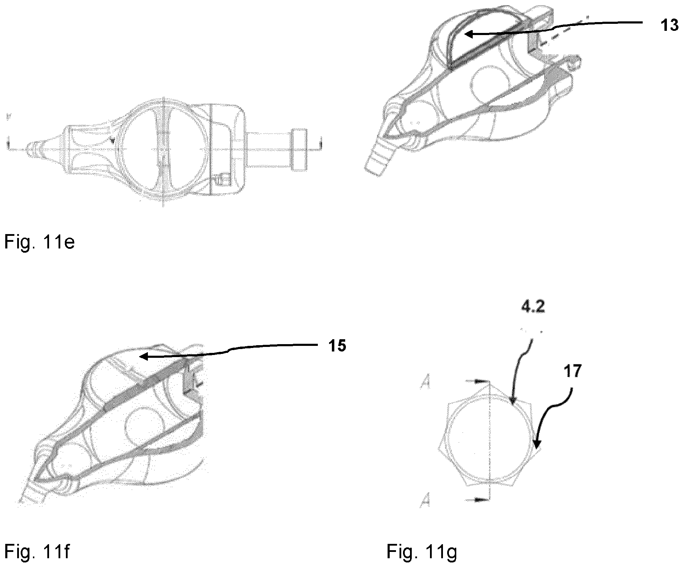

Figur 1 zeigt eine erfindungsgemäße leere Mischkapsel **1** mit Führungsadapter **7** und Auspresskolben **8** in Schnittdarstellung mit nach vorne geschobenem Verschlusskolben **6.** Die Mischkapsel 1 umfasst ein Kapselgehäuse **2** mit einer Ausbringtülle **3.** Ferner ist das drehbar gelagerte Drehelement **4.2** sowie der Deckel **4.1** dargestellt. Figuren 2a und 2b stellen eine Mischkapsel nach Figur 1 im Querschnitt und in der Draufsicht dar. In Figur 2a ist der erste Mischraum **5a** mit dem zweiten Mischraum **5b** in der Mischkapsel **1** koaxial angeordnet, so dass der Verschlusskolben **6** durch den Auspresskolben **8,** der beweglich im Führungsadapter **7** gelagert ist, durch den ersten Mischraum **5a** bis an den zweiten Mischraum **5b** eingeschoben dargestellt ist. In dieser Position bilden der erste und der zweite Mischraum den gemeinsamen Mischraum. In der Ausbringtülle **3** sind der hintere **3.3** und der mittlere **3.2** Bereich im Inneren der Ausbringtülle sowie die Ausbringöffnung **3.1** dargestellt. Das Drehelement **4.2** kann um die Drehachse **Y** gedreht werden, wobei gleichzeitig der Rohrabschnitt **5.1** umfassend den ersten Mischraum **5a** mitgedreht wird. Vorzugsweise weist das Drehelement seitlich am äußeren Umfang Vorsprünge auf (nicht dargestellt) oder das planare Drehelement weist auf der äußeren Oberfläche Rippen auf, besonders bevorzugt weist das Drehelement auf der äußeren Oberfläche eine Nut **15** (s. Fig. 11f) oder eine Öffnung **16** (s. Fig. 11d) sowie ggf. zusätzlich Erhöhungen und/oder Vertiefungen, wie Rippen, auf, die dem Anwender ein Schwenken des Drehelementes um die Mittelachse erleichtern und/oder die Lage der Mischkapsel anzeigen. In die Nut **15** kann ein längliches Hilfsmittel wie ein Profil oder ein Pin eingeschoben werden. Die Längsachse **Z** der Mischkapsel ist in Figur 2b angedeutet. In dem Verschlusskolben **6** ist der vordere Bereich **8.1** des Auspresskolbens in die Vertiefung **6.4** eingesteckt. Der mittlere Bereich **8.2** des Auspresskolbens **8** dient der Führung des Kolbens in der Mischkammer. Der hintere Bereich **8.3** kann mit einem externen Werkzeug weiter in Richtung der Mischkammern geschoben werden. Die Lamellen **6.1** und **6.2** des Verschlusskolbens 6 liegen innen an der Mischkammer an.

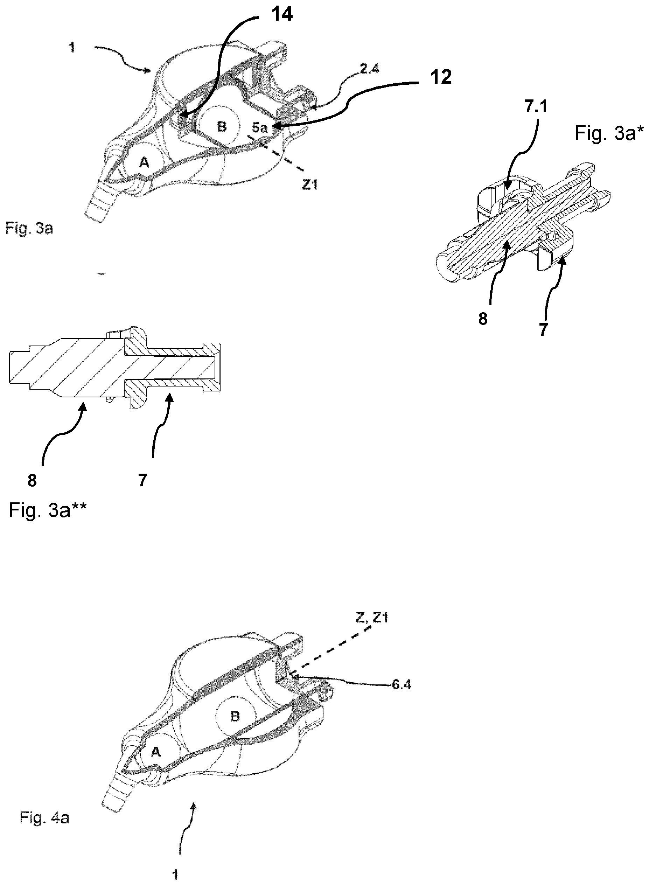

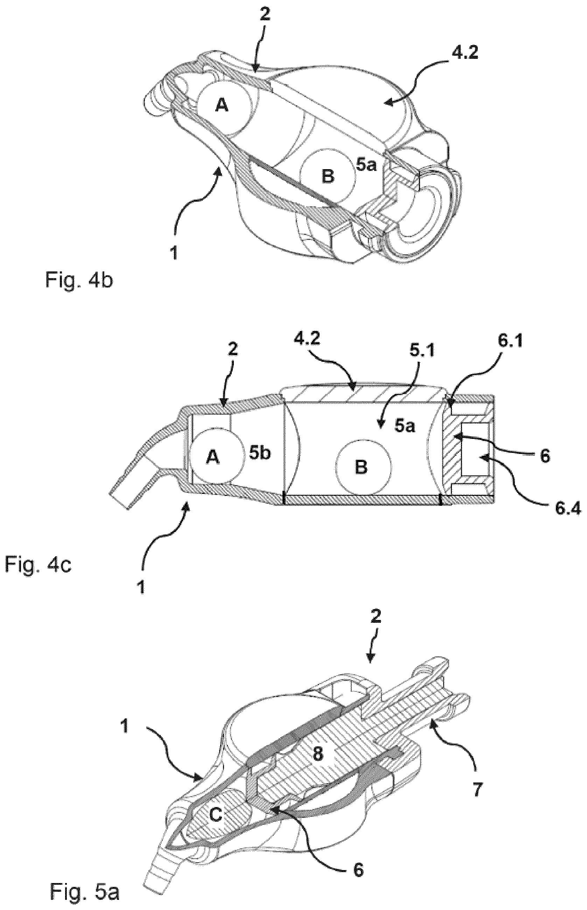

Figuren 3a, 3a* und 3a** zeigen eine Mischkapsel **1** in Schnittdarstellung in der erster Stellung (Verkaufs-/Lagerposition) enthaltend die Zusammensetzung **B** im ersten Mischraum **5a** und die Zusammensetzung **A** im zweiten Mischraum **5b.** Die Längsachse **Z1** des ersten Mischraumes bzw. Rohrabschnittes ist etwa senkrecht zur Längsachse **Z** der Kapsel bzw. des Kapselgehäuses dargestellt. An der Kapsel ist eine Verschlussmittel **2.4** im hinteren Bereich angeformt, wie bspw. ein Bajonett-Verschluss **2.4.** Ferner zeigen die Figuren 3a* und 3a** den Führungsadapter **7** mit eingestecktem Auspresskolben **8.** Der Auspresskolben ist mit im oberen Bereich des Auspresskolbens am äußeren Umfang umlaufenden Arretiermitteln **8.4,** wie Erhöhungen oder Rastnocken bzw. Nasen **8.4,** mit dem Adapter verrastet. Figur 3b zeigt einen Rohrabschnitt **5.1** mit erstem Mischraum **5a,** dessen Längsachse **Z1** um 90° zur Längsachse **Z** der Kapsel verdreht ist. Im zweiten Mischraum **5b** ist die Zusammensetzung **A** dargestellt. In den Figuren 4a, 4b und 4c ist die zweite Stellung der Mischkapsel **1** dargestellt, in der der erste Mischraum **5a** und der zweite Mischraum **5b** koaxial zueinander angeordnet sind. In der zweiten Stellung können die Zusammensetzungen **A** und **B** miteinander in dem gebildeten gesamten Mischraum **5a** und **5b** gemischt werden. In dieser Ausführungsform bilden der Rohrabschnitt **5.1** mit dem Drehelement **4.2** ein integrales Bauteil. Der nicht drehbare Deckel **4.1** (Fig. 1, 2a) und das drehbare Drehelement **4.2** (Fig. 1, 2a) sindmit dem Kapselgehäuse **2** in der Öffnung **14** (Fig. 3a) verrastet. Nach einer Alternative ist das Drehelement mit dem Kapselgehäuse drehbar verrastet, insbesondere wenn der Deckel nicht drehbar ist. Das Ende des Rohrabschnitts **5.1** liegt dicht an der Gehäuseinnenwand **12** an. In Figur 4c ist die vordere umlaufende Lamelle **6.1** des Verschlusskolbens **6** dargestellt.

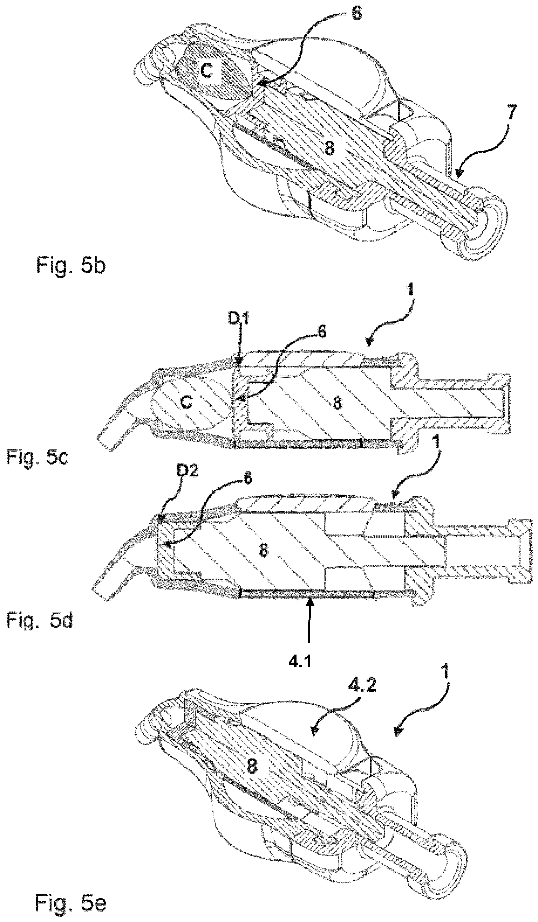

In den Figuren 5a, 5b, 5c, 5d und 5e ist die Mischkapsel **1** mit gemischter Zusammensetzung C in einer Schnittdarstellung dargestellt. Der Auspresskolben **8** ist in der Vertiefung **6.4** des Verschlusskolbens **6** eingesteckt und durch den ersten Mischraum **5a** bis an den zweiten Mischraum **5b** geschoben. Die Zusammensetzung **C** kann nun durch weiteres Vortreiben des Auspresskolbens **8** sowie des Verschlusskolbens **6** aus der Mischkapsel **1** appliziert werden. Der Verschlusskolben liegt in dieser Position noch mit einem Durchmesser **D1** mit abstehenden Lamellen vor, wie in Figur 5c dargestellt. Bei weiterem Vorschieben des Verschlusskolbens legen sich die Lamellen außen an den Verschlusskolben **6** an und der Durchmesser des Verschlusskolbens vermindert sich auf den Durchmesser **D2,** wie in Figur 5d und 5e dargestellt.

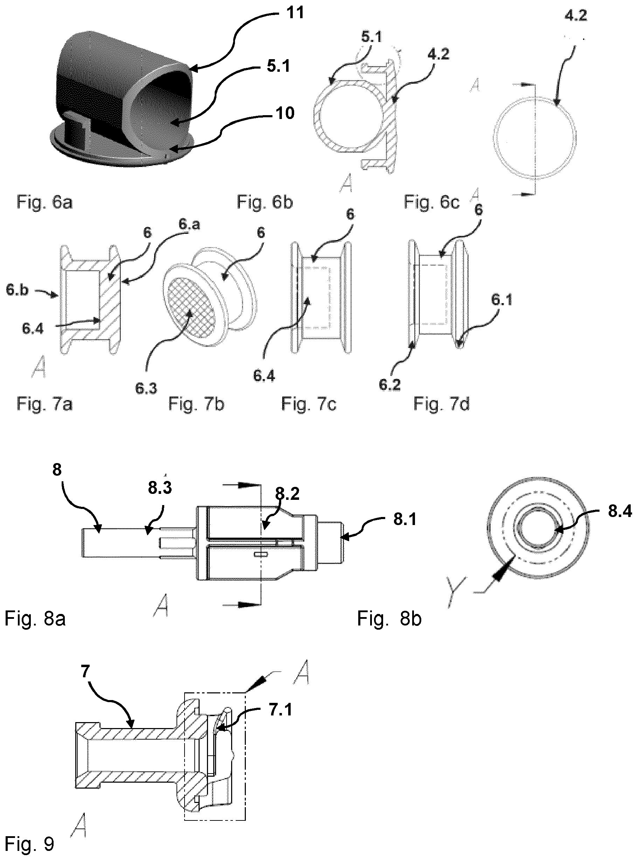

Die Figuren 6a, 6b, 6c stellen das Drehelement **4.2** dar. Das Drehelement **4.2** umfasst den Rohrabschnitt **5.1,** der den ersten Mischraum **5a** bildet. Der Rohrabschnitt **5.1** oder die einseitig geschlossene zylindrische Hülse **5.1** weisen an ihren offenen Enden **10** an je zwei sich gegenüberliegenden Mantelflächen zumindest bereichsweise eine gewölbte Kontur **11** auf. Vorzugsweise weist das Drehelement auf der äußeren Oberfläche eine Öffnung **16** oder eine Nut **15** (s. Fig. 11d/f) auf, in die ein Hilfsmittel zum Drehen des Drehelementes **4.2** eingesetzt werden kann. Vorzugsweise zeigt die Nut **15** die Stellung des ersten Mischraumes an. Wenn die Nut koaxial zur Längsachse des Kapselgehäuses ausgerichtet ist, ist auch der erste Mischraum **5a** koaxial zur Längsachse des Kapselgehäuses ausgerichtet. Es wird die zweite Stellung, d.h. Misch- und/oder Austragsposition angezeigt. Ist die Nut senkrecht zur Längsmittelachse des Kapselgehäuses ausgerichtet wird die erste Stellung, d.h. Transport- und/oder Lagerposition, angezeigt (s. Fig. 11f).

In den Figuren 7a, 7b, 7c und 7d ist der Verschlusskolben **6** dargestellt, wobei Figuren 7a und 7c die Vertiefung **6.4** auf dem Mischraum abgewandten Seite **6b** zeigt. Figur 7b zeigt die Oberflächenrauheit **6.3** des Verschlusskolbens auf der dem ersten Mischraum **5a** zugewandten Seite **6a.** In Figur 7d sind die ein- oder zwei phasigen Lamellen **6.1** und **6.2** dargestellt. In den Figuren 8a, 8b und 9 sind der Führungsadapter **7** sowie der Auspresskolben **8,** der vorzugsweise aus PC (Polycarbonat) gefertigt sein kann, mit seinem vorderen **8.1,** mittleren **8.2** und hinteren Bereich **8.3** dargestellt, wobei in Figur 8b die Noppen, die innen am Führungsadapter **7** anliegen, in der Draufsicht dargestellt. Figur 9 zeigt ein Mittel **7.1** zum Festlegen des Führungsadapters, wie einen Bajonett-Verschluss **7.1,** am Gehäuse der Mischkapsel **2.** In den Figuren 10a und 10b sind die Widerstandsmittel **9,** die als eine teilweise Wand oder nach innen hervorstehende und in Richtung auf den Mischraum gerichtete Nase(n) ausgebildet sein können. Die Figuren 11a, 11b, 11c, 11d und 11e zeigen unterschiedliche Ausführungsformen der separaten Griffelemente **13,** die an dem Drehelement angebracht werden können oder ein Drehelement mit integralem sich in etwa senkrecht zur Oberfläche des Drehelementes erstreckendes flächiges Griffelement **13.** Figur 11d stellt dar ein Drehelement mit mittiger Öffnung **16** auf der Oberseite zur Aufnahme des vorderen Bereiches **8.1** des Führungskolbens mit dem die Drehbewegung ausgeführt werden kann. Nach einer Alternative weist das Drehelement **4.2** eine sechseckige Öffnung **4.1,** insbesondere eine Innen-Mehrkantöffnung, auf, in die der Auspresskolben **8** mit seinem vorderen Bereich **8.1,** der ein sechseckiges Profil aufweist, einsetzbar ist. Auf dem Drehelement in Figur 11e erstreckt sich ein etwa senkrecht abstehendes flächiges oder nach außen zulaufendes Griffelement **13,** das integral mit dem Drehelement **4.2** vorliegt oder über Vorsprünge in Vertiefungen des Drehelementes eingesteckt werden kann. Figur 11f zeigt ein Drehelement mit einer Nut **15** in die ein längliches Hilfsmittel eingreifen kann um das Drehmoment zur Durchführung der Drehbewegung des Drehelementes zu bewirken. Die Nut kann sich über den Durchmesser des Drehelementes erstrecken und quasi jede sinnvolle Profilierung, wie auch ein Hohlprofil, aufweisen in die ein Hilfsmittel eingreifen kann. Fig. 11g zeigt ein Drehelement **4.2** mit am seitlichen Umfang des Deckels angeordneten Vorsprüngen **17.**

### Bezugszeichen:

- **1**: Mischkapsel
- **2**: Kapselgehäuse; **2.1** vorderes Ende; **2.2** mittlerer Bereich, **2.3** hinteres Ende des Kapselgehäuses **2, 2.4** Verschlussmittel, wie Bajonett-Verschluss
- **3**: Ausbringtülle, **3.1** Ausbringöffnung; **3.2, 3.3** innen im Auslass; **3.2** vorderer Bereich, **3.3** hinterer Bereich in innerer Ausbringtülle **3**
- **4.1**: Deckel
- **4.2**: Drehelement in dem Gehäuse
- **5a**: drehbar gelagerter erster Mischraum; **5b** zweiter Mischraum; **5a+5b** gesamter Mischraum; **5.1** Rohrabschnitt, insbesondere zylindrische Hülse oder einseitig geschlossene zylindrische Hülse **5.1**
- **6**: Verschlusskolben, **6a** dem Mischraum **5a** zugewandten Seite **6a,** dem Mischraum abgewandten Seite **6b, 6.1** Lamelle an der dem Mischraum zugewandten Seite **6a, 6.2** Lamelle an der dem Mischraum **5** abgewandten Seite **6b,**
- **6.3**: Oberflächenrauheit des Verschlusskolbens
- **6.4**: Vertiefung auf der dem Mischraum abgewandten Seite **6b**
- **7**: Führungsadapter, **7.1** Mittel zum Festlegen, wie Bajonett-Verschluss
- **8**: Auspresskolben, **8.1** vorderen Bereiches **8.1** des Auspresskolbens **8, 8.2** mittlerer Bereich, **8.3** hinterer Bereich des Auspresskolbens **8, 8.4** Arretiermittel, wie Erhöhung
- **9**: Widerstandsmittel, teilweise Wand oder Nase(n) bzw. Zapfen
- **10**: offene(s) Ende(n) des Rohrabschnitts oder einseitig geschlossener Hülse
- **11**: Ende mit gewölbter Kontur, insbesondere Kreisabschnitte
- **12**: Gehäuseinnenwand
- **13**: separates Griffelement, das Griffelement ist verbindbar und lösbar mit dem Drehelement festlegbar
- **14**: Öffnung zur Aufnahme des Drehelementes
- **15**: Nut zur Aufnahme des Drehmomentes in Verbindung mit einem Hilfsmittel
- **16**: Öffnung bspw. symmetrisch und/oder ein- oder mehrzählig, wie Innen-Mehrkant-Öffnung
- **17**: Vorsprung
- **D1,**: **D2** Durchmesser **D1** des Verschlusskolbens ist im Wesentlichen reduzierbar auf den Durchmesser **D2**
- **Y**: Drehachse der Drehelementes **(4.2)** und optional des Deckels **4.1** und/oder der Mischkammer **5a**
- **Z**: Längsachse der Kapsel, **Z1** Längsachse Rohrabschnitt
- **A**: pastöse bzw. knetbare dentale Zusammensetzungen (Komponente **A**)
- **B**: pastöse bzw. knetbare dentalen Zusammensetzungen (Komponente **B**)
- **C**: gemischte pastöse bzw. knetbare dentale Zusammensetzungen (Mischung der Komponenten **A** und **B**)

## Patentansprüche

1. Zwei Komponenten Mischkapsel (1) zur Aufnahme und zum Mischen von zwei Zusammensetzungen mit einem Kapselgehäuse (2), das an seinem vorderen Ende (2.1) eine Ausbringöffnung (3.1) aufweist, wobei die Mischkapsel (1) ein im Kapselgehäuse drehbar gelagertes Drehelement (4.2) und einen gegenüber vom Drehelement (4.2) im Kapselgehäuse angeordneten Deckel ohne Griff oder ohne Griffe (4.1) umfasst, wobei die Drehachse (Y) des Drehelementes (4.2) in etwa senkrecht zur Längsachse (Z) der Mischkapsel (1) angeordnet ist, und wobei dem Drehelement ein drehbar gelagerter erster Mischraum (5a) zugeordnet ist und im Kapselgehäuse (2) ein zweiter Mischraum (5b) angeordnet ist, wobei im Kapselgehäuse (2) am hinteren Ende (2.3) ein Verschlusskolben (6) angeordnet ist, und der Verschlusskolben (6) entlang der Längsachse (Z) der Mischkapsel durch den ersten Mischraum (5a) und/oder einen hohlen Rohrabschnitt (5.1) und einen zweiten Mischraum (5b) hindurchführbar ist, wenn der Mischraum (5a) oder der Rohrabschnitt (5.1) koaxial zur Längsachse (Z) der Mischkapsel (1) ausgerichtet sind,
**dadurch gekennzeichnet, dass**
der Deckel ohne Griff(e) nicht drehbar mit dem Kapselgehäuse verbunden ist, wobei
a) auf das Drehelement (4.2) ein separates Griffelement (13) aufsetzbar oder damit verrastbar ist, oder in das Drehelement in eine Öffnung (16) ein separates Griffelement (13) oder ein beweglicher Auspresskolben (8) einsetzbar ist, und/oder
b) das Drehelement mindestens eine Nut (15) aufweist, und/oder
c) das Drehelement mindestens einen integral mit dem Drehelement verbundenen Griff aufweist, und/oder
d) das Drehelement mindestens eine Nut (15), eine mehreckige Öffnung (16), eine Öffnung (16) mit ein- oder mehrzähliger Symmetrie oder am seitlichen Umfang des Deckels mindestens einen Vorsprung oder mindestens einen im Deckel versenkbaren Vorsprung oder mindesten einen in das Drehelement einklappbaren Vorsprung oder mindestens einen in das Drehelement einklappbares Griffelement aufweist.

2. Mischkapsel nach Anspruch 1, **dadurch gekennzeichnet, dass** an dem im Gehäuse (2) drehbar gelagerten Drehelement (4.2) der erste Mischraum (5a) angeordnet ist.

3. Mischkapsel nach Anspruch 1 oder 2, **dadurch gekennzeichnet, dass** im Gehäuse (2) das drehbar gelagerte Drehelement und der erste Mischraum (5a) ein einteiliges Bauteil bilden.

4. Mischkapsel nach einem der Ansprüche 1 bis 3, **dadurch gekennzeichnet, dass** an dem im Gehäuse (2) drehbar gelagerten Drehelement (4.2) der erste Mischraum (5a) angeordnet ist, der in Form eines Rohrabschnitts (5.1) oder einer einseitig geschlossenen zylindrischen Hülse (5.1) vorliegt.

5. Mischkapsel nach einem der Ansprüche 1 bis 4, **dadurch gekennzeichnet, dass** das drehbar gelagerte Drehelement und der erste Mischraum (5a) ein integrales Bauteil, bilden.

6. Mischkapsel nach einem der Ansprüche 4 bis 5, **dadurch gekennzeichnet,**
**dass** der mit dem drehbar gelagerten Drehelement (4.2) verbundene Rohrabschnitt (5.1) oder die einseitig geschlossene zylindrische Hülse (5.1) den ersten Mischraum (5a) bildet und sich a) im vorderen Bereich (2.1) im Kapselgehäuse (2) der zweite Mischraum (5b) befindet oder b) sich im hinteren Bereich (2.3) im Kapselgehäuse (2) der zweite Mischraum (5b) befindet.

7. Mischkapsel nach einem der Ansprüche 4 bis 6, **dadurch gekennzeichnet,**
**dass** der mit dem drehbar gelagerten Drehelement (4.2) verbundene Rohrabschnitt (5.1) den ersten Mischraum (5a) bildet und sich im vorderen Bereich (2.1) im Kapselgehäuse (2) der zweite Mischraum (5b) befindet,
wobei sich die Mischkapsel a) in einer ersten Stellung (Lagerung) befindet, wenn sich die Längsachse (Z1) des Rohrabschnitts (5.1) vorzugsweise in etwa 90° verdreht zur Längsachse (Z) des Kapselgehäuses (2) befindet, so dass der erste Mischraum (5a), insbesondere umfassend die Zusammensetzung B, und der zweite Mischraum (5b), insbesondere umfassend die Zusammensetzung A, voneinander getrennt sind, oder wobei sich die Mischkapsel
b) in einer zweiten Stellung befindet, wenn sich die Längsachse (Z1) des Rohrabschnitts (5.1) vorzugsweise im Wesentlichen koaxial zur Längsachse (Z) des Kapselgehäuses (2) befindet, so dass der erste Mischraum (5a) und der zweite Mischraum (5b) einen gemeinsamen Mischraum (5a+5b) bilden, insbesondere umfassend die Zusammensetzungen A und B, oder,
wobei sich die Mischkapsel in Stellung b) in einer Ausbringstellung c) befindet, wenn der Führungsadapter (7) mit beweglichem Auspresskolben (8) am hinteren Ende (2.3) des Kapselgehäuses (2) angeordnet ist, wobei der bewegliche Auspresskolben (8) und der Verschlusskolben (6) durch den gemeinsamen Mischraum (5a+5b) in Richtung auf das vordere Ende (2.1) des Kapselgehäuses oder in Richtung auf den hinteren Bereich (3.3) in der Ausbringtülle (3) verschiebbar sind.

8. Mischkapsel nach einem der Ansprüche 1 bis 7, **dadurch gekennzeichnet, dass** der bewegliche Verschlusskolben (6) in einer Öffnung am hinteren Ende des Kapselgehäuses angeordnet ist.

9. Mischkapsel nach Anspruch 8, **dadurch gekennzeichnet, dass** der bewegliche Verschlusskolben (6) in seinem Durchmesser reduzierbar ist.

10. Mischkapsel nach einem der Ansprüche 1 bis 9, **dadurch gekennzeichnet, dass** an das hintere Ende (2.3) des Gehäuses (2) der Mischkapsel (1) ein Führungsadapter (7) in dem der bewegliche Auspresskolben (8) angeordnet ist, anbringbar ist.

11. Mischkapsel nach einem der Ansprüche 1 bis 10, **dadurch gekennzeichnet, dass**
a) das Drehelement mindestens eine Nut (15) zur Aufnahme eines Hilfsmittels aufweist, und/oder
b) das Drehelement mindestens eine Innen-Mehrkantöffnung, zur Aufnahme eines mehreckigen Profil, insbesondere eines Außen-Mehrkantprofilsaufweist.

12. Mischkapsel nach einem der Ansprüche 1 bis 11, **dadurch gekennzeichnet, dass**
a) der Deckel ohne Griff(e) die gleich äußere Oberflächenkontur wie das Kapselgehäuse aufweist, und/oder
b) der Deckel ohne Griff(e) eine gewölbte, strukturierte und/oder planare äußere Oberfläche aufweist, und/oder
c) der Deckel ohne Griff(e) eine Vertiefung in Form einer 3D-Wiedergabe eines Markenbestandteils oder einer Marke aufweist, und/oder
d) der Deckel ohne Griff(e) mindestens eine Nut, eine mehreckige Öffnung (16), eine Öffnung (16) mit ein- oder mehrzähliger Symmetrie, insbesondere eine Innen-Mehrkantöffnung, zur Aufnahme eines mehreckigen Profil, insbesondere eines Außen-Mehrkantprofils, oder am seitlichen Umfang des Deckels mindestens einen Vorsprung oder mindestens einen im Deckel versenkbaren Vorsprung aufweist.

13. Verfahren zum Mischen von mindestens zwei Zusammensetzungen A und B zu einer Zusammensetzung C in einer Mischkapsel nach einem der Ansprüche 1 bis 12, umfassend die Schritte
(i) Überführen der Mischkapsel aus einer a) ersten Stellung in eine b) zweite Stellung indem durch Drehen des Drehelementes (4.2) um seine Drehachse (Y) mit dem Rohrabschnitt (5.1) in dem sich der Mischraum (5a) und die Zusammensetzung B befindet, der Rohrabschnitt (5.1) in Richtung auf die Längsachse (Z) des Kapselgehäuses (2) gedreht wird, so dass der erste Mischraum (5a) umfassend die Zusammensetzung B und der zweite Mischraum (5b) im Kapselgehäuse (2) umfassend die Zusammensetzung A einen gemeinsamen Mischraum (5a+5b) bilden,
(ii) Mischen der Zusammensetzungen A und B miteinander, indem die Mischkapsel (1) bewegt wird, und
(iii) Erhalten der Zusammensetzung C.

14. Verfahren nach Anspruch 13, **dadurch gekennzeichnet, dass**
das (iv) nicht-therapeutische Ausbringen der Zusammensetzung C aus der Mischkapsel erfolgt, mit der Schritten (iv.1) Festlegen des Führungsadapters (7) mit beweglichem Auspresskolben (8) am hinteren Ende (2.3) des Kapselgehäuses (2),
(iv.2) Einschieben des Auspresskolbens (8) zusammen mit dem Verschlusskolben (6) in das Kapselgehäuse (2) der Mischkapsel (1), so dass der Verschlusskolben (6) vom Auspresskolben (8) durch den gemeinsamen Mischraum (5a+5b) geschoben wird.

15. Verfahren nach Anspruch 13 oder 14, **dadurch gekennzeichnet, dass**
sich die Mischkapsel a) in einer ersten Stellung befindet, wenn sich die Längsachse (Z1) des Rohrabschnitts (5.1) vorzugsweise in etwa 90° verdreht zur Längsachse (Z) des Kapselgehäuses (2) befindet, so dass der erste Mischraum (5a), insbesondere umfassend die Zusammensetzung (B), und der zweite Mischraum (5b), insbesondere umfassend die Zusammensetzung (A), voneinander getrennt sind, oder wobei sich die Mischkapsel
b) in einer zweiten Stellung befindet, wenn sich die Längsachse (Z1) des Rohrabschnitts (5.1) vorzugsweise koaxial zur Längsachse des Kapselgehäuses (2) befindet, so dass der erste Mischraum (5a) und der zweite Mischraum (5b) einen gemeinsamen Mischraum (5a+5b) bilden, insbesondere umfassend die Zusammensetzungen (A und B), oder,
wobei sich die Mischkapsel in Stellung b) auch in einer Ausbringstellung c) befindet, wenn der Führungsadapter (7) mit beweglichem Auspresskolben (8) am hinteren Ende (2.3) des Kapselgehäuses (2) angeordnet ist, wobei der bewegliche Auspresskolben (8) und der Verschlusskolben (6) durch den gemeinsamen Mischraum (5a+5b) in Richtung auf die Ausbringöffnung (3.1) verschiebbar sind.

16. Verwendung einer Mischkapsel nach einem der Ansprüche 1 bis 12 in der eine erste Mischkammer (5a) durch Drehen um ihre Drehachse (Y), wobei die Drehachse (Y) in etwa senkrecht zur Längsmittelachse (Z) des Kapselgehäuses (2) der Mischkapsel (1) angeordnet ist, in eine erste Stellung zur Lagerung und in eine zweite Stellung zum Mischen und Applizieren drehbar ist, wobei in der zweiten Stellung die erste Mischkammer (5a) mit einer zweiten Mischkammer (5b) eine gemeinsame Mischkammer (5a + 5b) bilden, wobei im Kapselgehäuse (2) am hinteren Ende (2.3) ein Verschlusskolben (6) angeordnet ist, wobei insbesondere der Verschlusskolben (6) entlang der Längsachse (Z) der Mischkapsel durch den ersten Mischraum (5a) und/oder den hohlen Rohrabschnitt (5.1) und einen zweiten Mischraum (5b) hindurchführbar ist, wenn der Mischraum (5a) oder der Rohrabschnitt (5.1) koaxial zur Längsachse (Z) der Mischkapsel (1) ausgerichtet sind, zum nichttherapeutischen Applizieren aus der gemeinsamen Mischkammer (5a + 5b).

## Claims

1. A two-component mixing capsule (1) for intake and for mixing of two compositions with a capsule housing (2) having a discharge opening (3.1) at its front end (2.1),
wherein the mixing capsule (1) comprises a rotary element (4.2) rotatably mounted in the capsule housing and a lid arranged opposite the rotary element (4.2) in the capsule housing without a handhold or without handholds (4.1), wherein the rotational axis (Y) of the rotary element (4.2) being approximately perpendicularly arranged to the longitudinal axis (Z) of the mixing capsule (1), and wherein a rotatably mounted first mixing chamber (5a) being assigned to the rotary element (4.2) in the capsule housing, and a second mixing chamber (5b) being arranged in the capsule housing (2), wherein a sealing piston (6) being arranged in the capsule housing (2) at the back end (2.3), and the sealing piston (6) being passable through the first mixing chamber (5a) and the pipe section (5.1) and a second mixing chamber (5b) along the longitudinal axis (Z) of the mixing capsule when the first mixing chamber (5a) is coaxially oriented with the longitudinal axis (Z) of the mixing capsule (1), **characterised in that**,
the lid without handhold(s) is non-rotatably connected to the capsule housing,
wherein
a) a separated handhold element (13) is attachable to the rotary element (4.2) or lockable to it, or a separated handhold element (13) or a movable squeezing piston (8) is insertable into the rotary element in an opening (16), and/or
b) the rotary element has at least one groove (15), and/or
c) the rotary element has at least one handhold integrally connected to the rotary element, and/or
d) the rotary element has at least one groove (15), a polygonal opening (16), an opening (16) having one-fold or multi-fold symmetry to receive a polygonal profile, or at least one protrusion at the lateral periphery of the lid or at least on protrusion retractable into the lid or at least one protrusion foldable into the rotary element or at least one handhold element foldable into the rotary element.

2. The mixing capsule according to claim 1, wherein the first mixing chamber (5a) is arranged at the rotatably mounted rotary element (4.2) in the capsule housing (2).

3. The mixing capsule according to claim 1 or 2, wherein the rotatably mounted rotary element in the capsule housing (2) and the first mixing chamber (5a) form a one-piece component.

4. The mixing capsule according to any one of claims 1 to 3, wherein the first mixing chamber (5a) is rotatably mounted rotary element (4.2) in the capsule housing (2) and the first mixing chamber (5a) being in the form of a pipe section (5.1) or a cylindrical one-side closed sleeve (5.1).

5. The mixing capsule according to any one of claims 1 to 4, wherein the rotatably mounted rotary element and the first mixing chamber (5a) being forming an integral component.

6. The mixing capsule according to any one of claims 4 to 5, wherein
the pipe section (5.1) connected to the rotatably mounted rotary element (4.2) or the cylindrical one-side closed sleeve (5.1) forms the first mixing chamber (5a) and a) the second mixing chamber (5b) is located in the front region (2.1) in the capsule housing (2) or b) the second mixing chamber (5b) is located in the back region (2.3) in the capsule housing (2).

7. The mixing capsule according to any one of claims 4 to 6, wherein
the pipe section (5.1) connected to the rotatably mounted rotary element (4.2) forms the first mixing chamber (5a) and the second mixing chamber (5b) is located in the front region (2.1) in the capsule housing (2),
the mixing capsule being a) in a first position (storage) when the longitudinal axis (Z1) of the pipe section (5.1) is preferably twisted by approximately 90° to the longitudinal axis (Z) of the capsule housing (2), so that the first mixing chamber (5a), in particular comprising composition B, and the second mixing chamber (5b), in particular comprising composition A, are separated from each other, or
the mixing capsule being
b) in a second position when the longitudinal axis (Z1) of the pipe section (5.1) is preferably substantially coaxial with the longitudinal axis (Z) of the capsule housing (2), so that the first mixing chamber (5a) and the second mixing chamber (5b) form a common mixing chamber (5a+5b), in particular comprising compositions A and B, or, the mixing capsule in position b) being in a discharge position c) when the guiding adapter (7) with movable squeezing piston (8) is arranged at the back end (2.3) of the capsule housing (2), the movable squeezing piston and the sealing piston (6) being displaceable through the common mixing chamber (5a+5b) in the direction toward the front end (2.1) of the capsule housing or in the direction toward the back region (3.3) in the discharge spout (3).

8. The mixing capsule according to any one of claims 1 to 7, wherein the movable sealing piston (6) is arranged in an opening at the back end of the capsule housing

9. The mixing capsule according to claim 8 wherein the movable sealing piston (6) is reducible in its diameter.

10. The mixing capsule according to any of claims 1 to 9, wherein a guiding adapter (7), in which a movable squeezing piston (8) is arranged, is attachable to the back end (2.3) of the housing (2) of the mixing capsule (1).

11. The mixing capsule according to any of claims 1 to 10, wherein
a) the rotary element has at least one groove (15) for receiving an auxiliary means, and/or
b) the rotary element having one-fold or multi-fold symmetry, in particular to receive an external polygonal socket profile.

12. The mixing capsule according to any of claims 1 to 11, wherein
a) the lid without handhold(s) has the same outer surface contour as the capsule housing, and/or
b) the lid without handhold(s) has an arched, textured and/or planar outer surface, and/or
c) the lid without handhold(s) has a recess in the form of a 3D reproduction of a trademark component or trademark, and/or
d) the lid without handhold(s) has at least one grove, a polygonal opening (16), an opening (16) having one-fold or multi-fold symmetry to receive a polygonal profile, in particular an external polygonal socket profile, or at least one protrusion at the lateral periphery of the lid or at least one protrusion retractable into the lid.

13. A method for mixing at least two compositions A and B into a composition C in a mixing capsule according to any of claims 1 to 12, comprising the steps of
(i) transferring the mixing capsule from a) a first position into b) a second position by the pipe section (5.1) being rotated in the direction toward the longitudinal axis (Z) of the capsule housing (2), by rotating the rotary element (4.2) with the pipe section (5.1), in which the mixing chamber (5a) and composition B are located, about its rotational axis (Y), so that the first mixing chamber (5a) comprising composition B and the second mixing chamber (5b) in the capsule housing (2) comprising composition A form a common mixing chamber (5a+5b),
(ii) mixing compositions A and B with each other, by the mixing capsule (1) being moved, and
(iii) obtaining composition C.

14. The method according to claim 13, wherein
(iv) non-therapeutic discharging of composition C from the mixing capsule is made, with the steps of
(iv.1) fastening the guiding adapter (7) with movable squeezing piston (8) at the back end (2.3) of the capsule housing (2),
(iv.2) pushing the squeezing piston (8) into the capsule housing (2) of the mixing capsule (1) along with the sealing piston (6), so that the sealing piston (6) is pushed through the common mixing chamber (5a+5b) by the squeezing piston (8).

15. The method according to claim 13 or 14, wherein
the mixing capsule a) is in a first position when the longitudinal axis (Z1) of the pipe section (5.1) is twisted by approximately 90° to the longitudinal axis (Z) of the capsule housing (2), so that the first mixing chamber (5a) comprising composition (B), and the second mixing chamber (5b) comprising composition (A), are separated from each another, or the mixing capsule being
b) in a second position when the longitudinal axis (Z1) of the pipe section (5.1) is preferably coaxial with the longitudinal axis of the capsule housing (2), so that the first mixing chamber (5a) and the second mixing chamber (5b) form a common mixing chamber (5a+5b) comprising compositions (A and B), or
the mixing capsule in position b) being also in a discharge position c) when the guiding adapter (7) with movable squeezing piston (8) is arranged at the back end (2.3) of the capsule housing (2), the movable squeezing piston (8) and the sealing piston (6) are displaceable through the common mixing chamber (5a+5b) in the direction towards the discharge opening (3.1).

16. Use of a mixing capsule according to claims 1 to 12, in which a first mixing chamber (5a) is rotatable in a first position for storing and in a second position for mixing and applying, by rotating about its rotational axis (Y) of the rotary element (4.2), wherein the rotational axis is approximately perpendicularly arranged to the longitudinal central axis (Z) of the capsule housing (2) of the mixing capsule (1), wherein the first mixing chamber (5a) and a second mixing chamber (5b) form a common mixing chamber (5a + 5b) in the second position, wherein a sealing piston (6) is arranged in the capsule housing (2) at the back end (2.3), wherein the sealing piston (6) is passable through the first mixing chamber (5a) and/or the hollow pipe section (5.1) and a second mixing chamber (5b) along the longitudinal axis (Z) of the mixing capsule when the mixing chamber (5a) or the pipe section (5.1) are coaxially oriented with the longitudinal axis (Z) of the mixing capsule (1), for non-therapeutic applying from the common mixing chamber (5a + 5b).

## Revendications

1. Capsule de mélange à deux composants (1) destinée à recevoir et à mélanger deux compositions, avec un boîtier de capsule (2) qui présente à son extrémité avant (2.1) une ouverture de distribution (3.1), la capsule de mélange (1) comprenant un élément rotatif (4.2) monté sur pivot dans le boîtier de capsule et un couvercle sans poignée ou sans poignées (4.1) disposé dans le boîtier de capsule en face de l'élément rotatif (4.2), l'axe de rotation (Y) de l'élément rotatif (4.2) étant disposé à peu près perpendiculairement à l'axe longitudinal (Z) de la capsule de mélange (1), et une première chambre de mélange (5a) montée sur pivot étant affectée à l'élément rotatif et une deuxième chambre de mélange (5b) étant disposée dans le boîtier de capsule (2), le boîtier de capsule (2) comportant à son extrémité arrière (2.3) un piston de fermeture (6), et le piston de fermeture (6) pouvant être guidé le long de l'axe longitudinal (Z) de la capsule de mélange à travers la première chambre de mélange (5a) et/ou une section de tube creuse (5.1) et une deuxième chambre de mélange (5b), lorsque la chambre de mélange (5a) ou la section de tube (5.1) sont orientées coaxialement à l'axe longitudinal (Z) de la capsule de mélange (1),
**caractérisée en ce que**
le couvercle sans poignée(s) est relié de manière non rotative au boîtier de capsule,
a) un élément de préhension séparé (13) pouvant être posé sur l'élément rotatif (4.2) ou enclenché avec celui-ci, ou un élément de préhension séparé (13) ou un piston d'expulsion mobile (8) pouvant être inséré dans l'élément rotatif dans une ouverture (16), et/ou
b) l'élément rotatif présentant au moins une rainure (15), et/ou
c) l'élément rotatif comportant au moins une poignée reliée d'un seul tenant à l'élément rotatif, et/ou
d) l'élément rotatif présentant au moins une rainure (15), une ouverture polygonale (16), une ouverture (16) avec une symétrie à un ou plusieurs nombres ou, sur le pourtour latéral du couvercle, au moins une saillie ou au moins une saillie escamotable dans le couvercle ou au moins une saillie escamotable dans l'élément rotatif ou au moins un élément de préhension escamotable dans l'élément rotatif.

2. Capsule de mélange selon la revendication 1, **caractérisée en ce que** la première chambre de mélange (5a) est disposée sur l'élément rotatif (4.2) monté sur pivot dans le boîtier (2).

3. Capsule de mélange selon la revendication 1 ou 2, **caractérisée en ce que**, dans le boîtier (2), l'élément rotatif monté sur pivot et la première chambre de mélange (5a) forment un composant monobloc.

4. Capsule de mélange selon l'une des revendications 1 à 3, **caractérisée en ce que** la première chambre de mélange (5a), qui se présente sous la forme d'une section de tube (5.1) ou d'un manchon cylindrique (5.1) fermé d'un côté, est disposée sur l'élément rotatif (4.2) monté sur pivot dans le boîtier (2).

5. Capsule de mélange selon l'une des revendications 1 à 4, **caractérisée en ce que** l'élément rotatif monté sur pivot et la première chambre de mélange (5a) forment un composant intégral.

6. Capsule de mélange selon l'une des revendications 4 à 5, **caractérisée en ce que** la section de tube (5.1) relié à l'élément rotatif (4.2) monté sur pivot ou le manchon cylindrique (5.1) fermé d'un côté forme la première chambre de mélange (5a) et a) la deuxième chambre de mélange (5b) se trouve dans la zone avant (2.1) dans le boîtier de capsule (2) ou b) la deuxième chambre de mélange (5b) se trouve dans la zone arrière (2.3) dans le boîtier de capsule (2).

7. Capsule de mélange selon l'une des revendications 4 à 6, **caractérisée en ce que** la section de tube (5.1) reliée à l'élément rotatif (4.2) monté sur pivot forme la première chambre de mélange (5a) et la deuxième chambre de mélange (5b) se trouve dans la zone avant (2.1) dans le boîtier de capsule (2),
la capsule de mélange a) se trouvant dans une première position (stockage) lorsque l'axe longitudinal (Z1) de la section de tube (5.1) est de préférence tourné d'environ 90° par rapport à l'axe longitudinal (Z) du boîtier de capsule (2), de façon à ce que la première chambre de mélange (5a), comprenant en particulier la composition B, et la deuxième chambre de mélange (5b), comprenant en particulier la composition A, soient séparées l'une de l'autre, ou bien
la capsule de mélange b) se trouvant dans une deuxième position lorsque l'axe longitudinal (Z1) de la section de tube (5.1) est de préférence sensiblement coaxial à l'axe longitudinal (Z) du boîtier de capsule (2), de façon à ce que la première chambre de mélange (5a) et la deuxième chambre de mélange (5b) forment une chambre de mélange commune (5a+5b), comprenant notamment les compositions A et B, ou
la capsule de mélange en position b) se trouvant dans une position de distribution c), lorsque l'adaptateur de guidage (7) avec piston d'expulsion mobile (8) est placé à l'extrémité arrière (2.3) du boîtier de capsule (2), le piston d'expulsion mobile (8) et le piston de fermeture (6) pouvant être déplacés à travers la chambre de mélange commune (5a+5b) en direction de l'extrémité avant (2.1) du boîtier de capsule ou en direction de la zone arrière (3.3) dans le manchon de distribution (3).

8. Capsule de mélange selon l'une des revendications 1 à 7, **caractérisée en ce que** le piston de fermeture mobile (6) est disposé dans une ouverture à l'extrémité arrière du boîtier de capsule.

9. Capsule de mélange selon la revendication 8, **caractérisée en ce que** le piston de fermeture mobile (6) peut être réduit en diamètre.

10. Capsule de mélange selon l'une des revendications 1 à 9, **caractérisée en ce qu'**un adaptateur de guidage (7), dans lequel est disposé le piston d'expulsion mobile (8), peut être monté sur l'extrémité arrière (2.3) du boîtier (2) de la capsule de mélange (1).

11. Capsule de mélange selon l'une des revendications 1 à 10, **caractérisée en ce que**
a) l'élément rotatif présente au moins une rainure (15) pour recevoir un moyen auxiliaire, et/ou
b) l'élément rotatif présente au moins une ouverture polygonale intérieure pour recevoir un profilé polygonal, en particulier un profilé polygonal extérieur.

12. Capsule de mélange selon l'une des revendications 1 à 11, **caractérisée en ce que**
a) le couvercle sans poignée(s) présente le même contour de surface extérieure que le boîtier de capsule, et/ou
b) le couvercle sans poignée(s) présente une surface extérieure bombée, structurée et/ou plane, et/ou
c) le couvercle sans poignée(s) présente un creux sous la forme d'une reproduction en 3D d'un élément de marque ou d'une marque, et/ou
d) le couvercle sans poignée(s) présente au moins une rainure, une ouverture polygonale (16), une ouverture (16) avec une symétrie à un ou plusieurs nombres, en particulier une ouverture polygonale intérieure, pour recevoir un profilé polygonal, en particulier un profilé polygonal extérieur, ou sur le pourtour latéral du couvercle au moins une saillie ou au moins une saillie escamotable dans le couvercle.

13. Procédé de mélange d'au moins deux compositions A et B en une composition C dans une capsule de mélange selon l'une des revendications 1 à 12, comprenant les étapes suivantes :
(i) transfert de la capsule de mélange d'une a) première position à une b) deuxième position en faisant tourner l'élément rotatif (4.2) autour de son axe de rotation (Y) avec la section de tube (5.1) dans laquelle se trouvent la chambre de mélange (5a) et la composition B, la section de tube (5.1) étant tournée en direction de l'axe longitudinal (Z) du boîtier de capsule (2) de façon à ce que la première chambre de mélange (5a), comprenant la composition B, et la deuxième chambre de mélange (5b) dans le boîtier de capsule (2), comprenant la composition A, forment une chambre de mélange commune (5a+5b),
(ii) mélange des compositions A et B en déplaçant la capsule de mélange (1) et
(iii) obtention de la composition C.

14. Procédé selon la revendication 13, **caractérisé en ce que** (iv) la distribution non thérapeutique de la composition C est effectuée à partir de la capsule de mélange, comprenant les étapes suivantes :
(iv.1) fixation de l'adaptateur de guidage (7) avec piston d'expulsion mobile (8) à l'extrémité arrière (2.3) du boîtier de capsule (2),
(iv.2) insertion du piston d'expulsion (8) conjointement avec le piston de fermeture (6) dans le boîtier de capsule (2) de la capsule de mélange (1), de façon à ce que le piston de fermeture (6) soit poussé par le piston d'expulsion (8) à travers la chambre de mélange commune (5a+5b).

15. Procédé selon la revendication 13 ou 14, **caractérisé en ce que**
la capsule de mélange a) se trouve dans une première position lorsque l'axe longitudinal (Z1) de la section de tube (5.1) est de préférence tournée d'environ 90° par rapport à l'axe longitudinal (Z) du boîtier de capsule (2), de façon à ce que la première chambre de mélange (5a), comprenant en particulier la composition (B), et la deuxième chambre de mélange (5b), comprenant en particulier la composition (A), soient séparés l'une de l'autre, ou la capsule de mélange b) se trouvant dans une deuxième position lorsque l'axe longitudinal (Z1) de la section de tube (5.1) est de préférence coaxiale à l'axe longitudinal du boîtier de capsule (2), de façon à ce que la première chambre de mélange (5a) et la deuxième chambre de mélange (5b) forment une chambre de mélange commune (5a+5b), comprenant notamment les compositions (A et B), ou
la capsule de mélange en position b) se trouvant également dans une position de distribution c) lorsque l'adaptateur de guidage (7) avec piston d'expulsion mobile (8) est disposé à l'extrémité arrière (2.3) du boîtier de capsule (2), le piston d'expulsion mobile (8) et le piston de fermeture (6) pouvant être déplacés à travers la chambre de mélange commune (5a+5b) en direction de l'ouverture de distribution (3.1).

16. Utilisation d'une capsule de mélange selon l'une des revendications 1 à 12, dans laquelle une première chambre de mélange (5a) est disposée par rotation autour de son axe de rotation (Y), l'axe de rotation (Y) étant disposé à peu près perpendiculairement à l'axe central longitudinal (Z) du boîtier de capsule (2) de la capsule de mélange (1), dans une première position pour le stockage et dans une deuxième position pour le mélange et l'application, dans la deuxième position la première chambre de mélange (5a) formant avec une deuxième chambre de mélange (5b) une chambre de mélange commune (5a + 5b), dans le boîtier de capsule (2) à l'extrémité arrière (2.3), un piston de fermeture (6) étant disposé, le piston de fermeture (6) pouvant notamment être guidé le long de l'axe longitudinal (Z) de la capsule de mélange à travers la première chambre de mélange (5a) et/ou la section de tube creuse (5.1) et une deuxième chambre de mélange (5b), lorsque la chambre de mélange (5a) ou la section de tube (5.1) sont orientées coaxialement à l'axe longitudinal (Z) de la capsule de mélange (1), pour une application non thérapeutique à partir de la chambre de mélange commune (5a + 5b).
